# EUROPEAN PATENT SPECIFICATION

(11) **EP 1 830 661 B1**
(45) Date of publication and mention of the grant of the patent: **21.04.2010**
(21) Application number: 05789115.2
(22) Date of filing: 03.10.2005
(51) Int. Cl.: A23G 4/00

(54) **NON-TACK CHEWING GUM**
NICHTKLEBRIGER KAUGUMMI
CHEWING-GUM NON COLLANT

(30) Priority: 22.12.2004 WO PCT/DK2004/000906
(43) Date of publication of application: 12.09.2007
(73) Proprietor: Gumlink A/S, 7100 Vejle (DK)
(72) Inventor: WITTORFF, Helle, DK-7120 Vejle Øst (DK); NEERGAARD, Jesper, DK-8362 Horning (DK)
(74) Representative: Olesen, Kaj
(86) International application number: PCT/DK2005/000629
(87) International publication number: WO 2006/066576

(56) References cited:
- WO-A-00/19837
- WO-A-2004/028267
- US-A- 5 672 367

## Description

### Field of the invention

The invention relates to a chewing gum according to the provisions of claim 1.

### Background of the invention

WO 00/19837 discloses an example of chewing gum preparation where poly(D,L-lactic acid) is applied in combination with tall oil glycerol ester and further chewing gum ingredients.

WO 2006/066575 discloses a chewing gum comprising a biodegradable polymer having a glass transition temperature (Tg) above 37°C.

Non-tack properties have been desired for decades in relation to chewing gum and have been pursued by several technical approaches.

One approach has been to apply different variants of poly vinyl acetate (PVA)-based gum base compositions.

Another approach has been to apply different types of biodegradable polymers in different chewing gum compositions.

The latter approach has among several other technical paths been solved by use of polyesters obtained through polymerization of cyclic esters.

One problem in relation to the use of such polymers is, however, that such polyesters may often have undesired properties in connection with chewing gum.

Thus, e.g. the homopolymer of L-lactide (LPLA) is a semicrystalline polymer. These types of material exhibit high-tensile strength and low elongation, and consequently have a high modulus that makes them more suitable for load-bearing applications in other applications than chewing gum.

In order to improve the desired properties of the polymers, extensive research has been performed by the provision of different copolymers of L-lactide and D,L-lactide. Specifically, attempts have been made to disrupt the crystallinity of L-lactide by the use of other monomers in the polymer chains, such as ε-caprolactone.

Such research has resulted in more amorphous polymers applicable for chewing gum application.

Other attempts following the same path have been to apply significant amounts of softeners in order to change the property of the individual polymers.

A problem relating to the above approaches is, however, that improved amorphous properties of the individual polymers obviously may invoke modifications of other structural features of the polymer in the direction of the typical conventional polymers with respect to the desired amorphous as well as the more undesired tackiness properties. This may result in an undesired tackiness when a user is chewing the chewing gum. Moreover, when the chewing gum is disposed in the environment it tends to tack to surfaces in the same way as conventional chewing gum.

It is the object of the invention to provide a chewing gum which benefits of acceptable chew feel as well as improved non-tackiness.

### Summary

The invention relates to a non-tack chewing gum comprising chewing gum ingredients,
said chewing gum comprising at least one elastomer and at least one resin,
said at least one resin comprising at least one synthetic homopolymer resin,
said synthetic homopolymer being biodegradable,
the amount of said synthetic biodegradable homopolymer of said chewing gum being from about ½% to 60% by weight of said chewing gum,
wherein said at least one synthetic homopolymer has a PD (PD: Polydispersity Index) of 1.1 to 20 and
wherein said at least one elastomer comprises butadiene-styrene, isobutylene-isoprene, polyisobutylene, polyisoprene or any combination thereof.

Improved non-tack properties of a chewing gum have been obtained by the application of a synthetic homopolymer according to the provisions of the invention combined with acceptable chew feel during use.

The obtained non-tack properties combined with acceptable chew feel is according to an embodiment of the invention obtained by a combination of a biodegradable homopolymer and an elastomer in the chewing gum.

The brittleness of the homopolymer may thus, during chewing, be compensated by the elastomer and the tackiness may be counteracted, especially after disposal, when the homopolymer induces brittleness into the chewing gum lump.

Such inducing of brittleness has been observed to influence the brittleness of the complete chewing gum and counteract floating.

Specifically, it has been observed that improved non-tack properties may be obtained in environments where the temperature is below or well below the glass transition temperature of the homopolymer.

According to the invention, biodegradable homopolymer resin designates that the homopolymer has resinous properties and has the function of a resin in the chewing gum.

The chewing gum according to the provisions of the invention may be regarded as having improved non-tack properties.

In an embodiment of the invention, the amount of said synthetic homopolymer of said chewing gum is from about 2% to 50% by weight of said chewing gum, preferably from about 2% to 30% by weight of said chewing gum.

Experiments have shown that a synthetic biodegradable homopolymer present in a significant amount leads to further improved non-tack properties compared to different co-polymers.

Said synthetic homopolymer is resinous.

The homopolymer forms a resinous part of a resin and elastomer mixture forming at least a part of the gum base of the chewing gum.

In an embodiment of the invention, the synthetic homopolymer comprises a polyester polymer.

According to an embodiment of the invention, a biodegradable polyester homopolymer may advantageously be applied as the resin or as the main resinous component of the chewing gum, thereby obtaining improved non-tack properties.

In an embodiment of the invention, said biodegradable polyester polymer is obtainable by ring-opening polymerization of cyclic monomers.

In an embodiment of the invention, said biodegradable polyester polymer is obtainable by ring-opening polymerization of cyclic monomers selected from the group of cyclic esters and cyclic carbonates.

In an embodiment of the invention, said biodegradable polyester polymer is obtainable by ring-opening polymerization of cyclic monomers selected from the group of D,L-lactide, L-lactide, glycolide, ε-caprolactone, δ-valerolactone, trimethylene carbonate (TMC) and dioxanone.

In an embodiment of the invention, said at least one homopolymer is selected from the group of poly(D,L-lactide) and poly glycolide.

Another homopolymer, such as poly(D,L-lactide) is a more amorphous polymer exhibiting a random distribution of both isomeric forms of lactic acid, and accordingly is unable to arrange into an organized crystalline structure. This material has lower tensile strength, higher elongation, and a much more rapid degradation time and is advantageous for use in chewing gum according to the invention.

According to an advantageous embodiment, it will thus be preferred to avoid using L- or D- lactic acid, respectively, as the sole monomers of a poly lactide.

In an embodiment of the invention, said at least one homopolymer is selected from the group of poly(D,L-lactide) and wherein the ratio between D and L-lactic acid monomers is between about 1:10 and 10:1.

In an embodiment of the invention, said at least one homopolymer is selected from the group of poly(D,L-lactide) and wherein the ratio between D and L - lactic acid monomers is about 1:1.

According to an advantageous embodiment, a one to one relationship between L and D-lactic acid monomers may be preferred in order to obtain an amorphous polymer suitable for use in chewing gum.

In an embodiment of the invention, said homopolymer comprises a polyester produced through reaction of at least one di- or polyfunctional alcohol or derivative thereof and at least one di- or polyfunctional acid or derivative thereof.

In an embodiment of the invention, said acid derivative comprises esters, anhydrides or halides of di- or polycarboxylic acids.

In an embodiment of the invention, said acid derivative comprises methyl or ethyl esters of acids.

In an embodiment of the invention, said homopolymer comprises a polyester produced through reaction of at least one di- or polyfunctional hydroxy carboxylic acid or derivative thereof such as L-lactic acid, D-lactic acid or glycolic acid.

Said at least one homopolymer has a PD of 1.1 to 20, preferably 1.3 to 12.

In an embodiment of the invention; said homopolymer has a glass transition temperature (Tg) above 20°C, preferably above 30°C and most preferably above about 35 °C.

According to an embodiment of the invention improved non-tack properties may be obtained by the application of a homopolymer having relative high glass transition temperature(s), as a relative high glass transition temperature may be applicable when applying the homopolymer as resinous component of a chewing gum and moreover increase an advantageous change of structural properties when disposed in the environment at moderate temperatures.

In an embodiment of the invention, the molecular weight of said at least one resin is less than 400,000 g/mol Mn.

In an embodiment of the invention, the molecular weight of said at least one resin is less than 200,000 g/mol Mn.

In an embodiment of the invention, the molecular weight of said at least one resin is less than 60,000 g/mol Mn.

According to an embodiment of the invention relatively low molecular weight of the homopolymer may be applicable and preferred in order to obtain an acceptable texture.

In an embodiment of the invention, the molecular weight of said at least one resin is about 60,000 g/mol Mn.

In an embodiment of the invention, the molecular weight of said at least one resin is within the range of 500 g/mol Mn to 60,000 g/mol Mn.

In an embodiment of the invention, the molecular weight of said at least one resin is within the range of 5000 g/mol Mn to 30,000 g/mol Mn.

In an embodiment of the invention, the chewing gum comprises at least one resin in the amount of at least 5% by weight of the chewing gum.

In an embodiment of the invention, the chewing gum comprises at least one resin in the amount of at least 8% by weight of the chewing gum.

In an embodiment of the invention, said chewing gum comprises at least one resin in the amount of about 2 to about 60% wt of the chewing gum.

In an embodiment of the invention, said chewing gum comprises at least one resin in the amount of about 5 to about 25% wt of the chewing gum.

In an embodiment of the invention, said at least one resin is substantially formed by said homopolymer.

According to an advantageous embodiment of the invention, substantially all of the resin comprises one or a combination of homopolymers, thereby invoking acceptable chew feel as well as advantageous non-tack properties under typical conditions of disposal.

In an embodiment of the invention, said resins or resinous polymers comprise at least one natural resin, at least one synthetic resin or any combination thereof.

According to an embodiment of the invention, the chewing gum comprises other resin(s) than the homopolymer.

In an embodiment of the invention, the chewing gum comprises said at least one elastomer in the amount of at least 3% by weight, preferably at least 5% by weight of said chewing gum.

In an embodiment of the invention, the chewing gum comprises said at least one elastomer in the amount of at least 8% by weight of the chewing gum.

In an embodiment of the invention, said chewing gum comprises said at least one elastomer in the amount of about 0.5 to about 70% wt of the chewing gum,

In an embodiment of the invention, said chewing gum comprises said at least one elastomer in the amount-of about 2 to about 20% wt of the chewing gum.

Said elastomer comprises styrene-butadiene, isobutylene-isoprene, polyisobutylene, polyisoprene or any combination thereof.

In an embodiment of the invention, said elastomer is biodegradable.

In an embodiment of the invention, said elastomer comprises a polyester.

In an embodiment of the invention, said elastomer is obtainable by ring-opening polymerization of cyclic monomers.

In an embodiment of the invention, said elastomer is obtainable by the polymerization of at least one di- or polyfunctional alcohol or derivative thereof and at least one di- or polyfunctional carboxylic acid or derivative thereof.

In an embodiment of the invention, the weight ratio between the resin having an average molecular weight of about 500 to 60000 g/mol Mn and the elastomer having an average molecular weight of about 30000 g/mol to 1000000 g/mol Mn is within the range of about 1:5 and 20:1.

According to a preferred embodiment of the invention, the ratio between the resin and the elastomer should be kept within a certain range in order to obtain the desired texture. The average molecular weight of the resin and the elastomer, respectively, may e.g. be obtained through a mixture of two or further resins and a mixture of two or further elastomers. Thus, an average molecular weight of a certain value of e.g. the elastomer may be obtained by mixing a high and low molecular weight elastomer in an appropriate ratio. Specifically, a mixture of about 2/3 low molecular elastomer (30000 g/mol) and 1/3 high molecular weight elastomer (400000) would result in an average molecular weight of about 153000.

In an embodiment of the invention, the weight ratio between the resin having an average molecular weight of about 500 to 60000 g/mol Mn and the elastomer having an average molecular weight of about 30000 g/mol to 1000000 g/mol Mn is within the range of about 1:3 and 10:1.

According to a further preferred embodiment of the invention, the ratio between the resin and the elastomer should be kept within a relatively narrow range of 1:3 and 10:1 in order to obtain the desired texture.

In an embodiment of the invention, said chewing gum comprises one or more chewing gum ingredients selected from the group comprising flavoring agents, sweetening agents, fillers, softeners, emulsifiers, and active ingredients.

In an embodiment of the invention, said flavoring agents comprise natural and synthetic flavorings in the form of natural vegetable components, essential oils, essences, extracts, powders, including acids and other substances capable of affecting the taste profile.

In an embodiment of the invention, said chewing gum comprises flavor in an amount of 0.01 to about 25 wt %, preferably in an amount of 0.1 to about 5 wt %, said percentage being based on the total weight of the chewing gum.

In an embodiment of the invention, the chewing gum is prepared with about 2-15% by weight of a syrup blend; wherein the syrup blend includes about 25-45% glycerin, about 55-75% hydrogenated starch hydrolysates.

According to an advantageous embodiment of the invention, the chewing gum comprises a non-tack chewing gum in which the ingredients exhibit excellent cohesive strength between each other without causing the gum to stick to external surfaces such as teeth and dentures. The chewing gum, according to the embodiment, does typically not exhibit short texture and does not easily break, rupture or separate during processing and handling. The chewing gum also has good sensory qualities.

An essential ingredient in the non-tack sugarless chewing gum of the present embodiment is a coevaporated blend including glycerine and hydrogenated starch hydrolysates. This syrup blend is prepared by mixing glycerine with a commercially available mixture of water and hydrogenated starch hydrolysates to form a three-component blend, and then evaporating most of the water from the blend. This coevaporated blend is in the form of syrup prior to addition into the chewing gum. It has been discovered that this syrup blend serves as an excellent binder between non-tack chewing gum ingredients, including the gum base ingredients, without causing adhesion to teeth or dentures. The syrup blend may be added after manufacture of the gum base, and during manufacture of the final chewing gum product. The syrup blend should constitute about 2 to about 15% by weight of the chewing gum.

As explained above, the syrup blend is added during manufacture of the chewing gum. Except for the addition of the syrup blend, the underlying chewing gum composition may be any non-tack chewing gum which could stand to benefit from improved binding between its ingredients. Generally, such chewing gums would include any gum having a non-tack gum base which could stand to benefit from improved binding. Often, the cohesiveness of a conventional chewing gum product, or lack thereof, has been dependent upon the cohesiveness of the gum base used in the chewing gum, or lack thereof.

In an embodiment of the invention, the syrup blend is present at about 2-15% by weight of the chewing gum.

In an embodiment of the invention, the syrup blend is present at about 5-10% by weight of the chewing gum.

In an embodiment of the invention, the syrup blend includes about 25-45% glycerin, about 55-75% hydrogenated starch hydrolysates.

In an embodiment of the invention, the syrup blend comprises a coevaporated blend of glycerin mixed with hydrogenated starch hydrolysates and water.

In an embodiment of the invention, the chewing gum comprises at least one softener in an amount of about 0 to about 20% by weight of the chewing gum, more typically about 0 to about 10% by weight of the chewing gum.

In an embodiment of the invention, the amount of emulsifier is in the range of 0 to 18% by weight of the chewing gum.

In an embodiment of the invention, said sweetening agents are selected from the group comprising bulk sweeteners, and high-intensity sweeteners, and combinations thereof.

In an embodiment of the invention, the chewing gum comprises sugar.

In an embodiment of the invention, the chewing gum is sugar free.

In an embodiment of the invention, said bulk sweeteners comprises an amount of about 5 to about 95%, preferably about 20 to about 80% by weight of the chewing gum.

In an embodiment of the invention, the chewing gum comprises high-intensity sweeteners in an amount of about 0 to about 1.2%, preferably about 0.1 to about 0.6% by weight of the chewing gum.

In an embodiment of the invention, the chewing gum comprises filler in an amount of about 0 to about 50% by weight of the chewing gum, more typically about 5 to about 20% by weight of the chewing gum.

In an embodiment of the invention, the chewing gum comprises at least one coloring agent.

In an embodiment of the invention, said chewing gum ingredients comprise active ingredients.

In an embodiment of the invention, said chewing gum is coated with an outer coating selected from the group comprising hard coating, soft coating and edible film-coating.

In an embodiment of the invention, the outer coating comprises at least one additive component selected from the group comprising a binding agent, a moisture-absorbing component, a film-forming agent, a dispersing agent, an antisticking component, a bulking agent, a flavoring agent, a coloring agent, a pharmaceutically or cosmetically active component, a lipid component, a wax component, a sugar, an acid and an agent capable of accelerating the after-chewing degradation of the degradable polymers.

In an embodiment of the invention, the chewing gum is wax free.

In an embodiment of the invention, the chewing gum is made by tableting.

According to an embodiment of the invention, the chewing gum may advantageously be processed and formed as a compressed chewing gum due to the fact that the homopolymer has advantageous non-tack properties, which may ease the granulation of the gum or gum base prior to the final compression.

### DETAILED DESCRIPTION

According to a preferred definition of biodegradability according to the invention, biodegradability is a property of certain organic molecules whereby, when exposed to the natural environment or placed within a living organism, they react through an enzymatic or microbial process, often in combination with a chemical process such as hydrolysis, to form simpler compounds, and ultimately carbon dioxide, nitrogen oxides, methane, water and the like.

In the present context the term 'biodegradable polymers' means environmentally or biologically degradable polymer compounds and refers to chewing gum base components which, after dumping the chewing gum, are capable of undergoing a physical, chemical and/or biological degradation, whereby the dumped chewing gum waste becomes more readily removable from the site of dumping or is eventually disintegrated to lumps or particles, which are no longer recognizable as being chewing gum remnants. The degradation or disintegration of such degradable polymers may be effected or induced by physical factors such as temperature, light, moisture, etc., by chemical factors such as oxidative conditions, pH, hydrolysis, etc. or by biological factors such as microorganisms and/or enzymes. The degradation products may be larger oligomers, trimers, dimers and monomers.

Preferably, the ultimate degradation products are small inorganic compounds such as carbon dioxide, nitrogen oxides, methane, ammonia, water, etc.

As referred to herein, the glass transition temperature (Tg) may be determined by for example DSC (DSC: differential scanning calorimetry). The DSC may generally be applied for determining and studying of the thermal transitions of a polymer and specifically, the technique may be applied for the determination of a second order transition of a material. The transition at Tg is regarded as such a second order transition, i.e. a thermal transition that involves a change in heat capacity, but does not have a latent heat. Hence, DSC may be applied for studying Tg. Unless otherwise indicated, a heating rate of 10°C/min will be applied.

Unless otherwise indicated, as used herein with regard to polymers, the term "molecular weight" means number average molecular weight (Mn) in g/mol. Furthermore, as used herein the short form PD designates the polydispersity of polymers, polydispersity being defined as Mw /Mn , where Mw is the weight average molecular weight of a polymer. A well-established technique for characterization of biodegradable polymers is gel permeation chromatography (GPC).

In the present text, it is assumed that the temperature in the mouth of the chewing gum consumer is about human body temperature, although it may in praxis during chewing be a few degrees below body temperature. A glass transition temperature above mouth temperature is herein referred to as a high Tg, whereas a Tg below mouth temperature is herein referred to as a low Tg.

Chewing gum of the present invention typically comprises a water-soluble bulk portion, a water-insoluble chewable gum base portion and flavoring agents. The water-soluble portion dissipates with a portion of the flavoring agent over a period of time during chewing. The gum base portion is retained in the mouth throughout the chew. The term chewing gum refers to both a chewing and bubble type gum in its general sense.

The gum base is the masticatory substance of the chewing gum, which imparts the chew characteristics to the final product. The gum base typically defines the release profile of flavors and sweeteners and plays a significant role in the gum product.

The insoluble portion of the gum typically may contain any combination of elastomers, vinyl polymers, elastomer plasticizers, waxes, softeners, fillers and other optional ingredients such as colorants and antioxidants. Polymeric elastomer plasticizers may also according to the invention generally be referred to as a resin or as a resinous compound.

The composition of gum base formulations can vary substantially depending on the particular product to be prepared and on the desired masticatory and other sensory characteristics of the final product. However, typical ranges (% by weight) of the above gum base components are: 5 to 80% by weight elastomeric compounds, 5 to 80% by weight elastomer plasticizers, 0 to 40% by weight of waxes, 5 to 35% by weight softener, 0 to 50% by weight filler, and 0 to 5% by weight of miscellaneous ingredients such as antioxidants, colorants, etc. The gum base may comprise about 5 to about 95 percent, by weight, of the chewing gum, more commonly, the gum base comprises 10 to about 60 percent of the chewing gum.

Elastomers provide the rubbery, cohesive nature to the gum, which varies depending on this ingredient's chemical structure and how it may be compounded with other ingredients.

Useful synthetic elastomers include high molecular weight elastomers such as butadiene-styrene copolymers, polyisoprene and isobutylene-isoprene copolymers, low-molecular weight elastomers such as polybutene, polybutadiene, polyisoprene and polyisobutylene.

Butadiene-styrene type elastomers (SBR) typically are copolymers of from about 20:80 to 60:40 styrene:butadiene monomers. The ratio of these monomers affects the elasticity of the SBR as evaluated by mooney viscosity. As the styrene:butadiene ratio decreases, the mooney viscosity decreases.
The structure of SBR typically consists of straight chain 1,3-butadiene copolymerized with phenylethylene (styrene) and provides the non-linear molecular nature of these elastomers. The average molecular weight of SBR is <600,000 g/mole.

Isobutylene-isoprene type elastomers (butyl rubber) have molar percent levels of isoprene ranging from 0,2 to 4,0. Similar to SBR, as the isoprene:isobutylene ratio decreases, so does the elasticity, measured by mooney viscosity.
The structure of butyl rubber typically consists of branched 2-methyl-1,3-butadiene (isoprene) copolymerized with branched 2-methylpropene (isobutylene), and, as with SBR, this type of structure is non-linear in nature. The average molecular weight of butyl rubber is in the range from 150,000 g/mole to 1,000,000 g/mole.

Polyisobutylene (PIB) as with SBR and butyl, is also non-linear in nature. The low molecular weight elastomers provide soft chew characteristics to the polymer system and still provide the elastic qualities as do the other elastomers. Average molecular weights may range from about 30,000 to 120,000 g/mole and the penetration may range from about 4 millimeters to 20 millimeters. The higher the penetration, the softer the PIB. Similar to the SBR and butyl, the high molecular weight elastomers provide elasticity the gum. Average molecular weight may range from 120,000 to 1,000,000 g/mole. Again, if used at all, the molecular weight should be relatively low.

Vinyl copolymeric types of polymers may also be applied as a supplementary polymer of the gum base. For vinyl copolymeric types, the amount of vinyl laurate, vinyl stearate, or ethylene present in the vinyl laurate/vinyl acetate (VL/VA), vinyl stearate/vinyl acetate (VS/VA), or ethylene/vinyl acetate (EVA) copolymers respectively typically ranges from about 10 to about 60 percent by weight of the copolymer. Average molecular weights of these polymers may range from about 2,000 g/mole to about 100,000 g/mole.

The vinyl polymers as polyvinyl alcohol and polyvinyl acetate having an average molecular weight from about 5,000 g/mole to about 65,000 g/mole.

Elastomer plasticizers vary the firmness of the gum base. Their specificity on elastomer inter-molecular chain breaking (plasticizing) along with their varying softening points cause varying degrees of finished gum firmness and compatibility when used in base. This may be important when one wants to provide more elastomeric chain exposure to the alkanic chains of the waxes.

According to the present invention, the chewing gum comprises one plasticizer, also referred to as a resin, comprising one or several biodegradable homopolymers.

Furthermore, according to the present invention, these biodegradable polymers are very suitable as resinous compounds in combination with one or further elastomers in the chewing gum.

Further polymeric or non-polymeric plasticizers may be applied according to the present invention are triacetine, acetylated mono-and di-and triglycerides of short chain fatty acids, acetylated mono-and di-and triglycerides of medium chain fatty acids, acetylated monoglycerides of long chain fatty acids, glycerol ester of rosin and low molecular weight PVAc. The two latter may also be referred to as a natural and synthetic resin, respectively, within the art.

The plasticizers used may be of one type or of combinations of more than one type. Typically, the ratios of one to the other are dependent on each respective softening point, the effect on flavor release, and the respective degree of tack they cause to the gum.

Examples of such generally non-biodegradable synthetic resins include polyvinyl acetate, vinyl acetate-vinyl laurate copolymers and mixtures thereof. Examples of non-biodegradable synthetic elastomers include, but are not limited to, synthetic elastomers listed in Food and Drug Administration, CFR, Title 21, Section 172,615, (the Masticatory Substances, Synthetic) such as polyisobutylene. e.g. having a gel permeation chromatography (GPC) average molecular weight in the range of about 10,000 to 1,000,000 including the range of 50,000 to 80,000, isobutylene-isoprene copolymer (butyl elastomer), styrene-butadiene copolymers e.g. having styrene-butadiene ratios of about 1:3 to 3:1, polyvinyl acetate (PVA), e.g. having a GPC average molecular weight in the range of 2,000 to 90,000 such as the range of 3,000 to 80,000 including the range of 30,000 to 50,000, where the higher molecular weight polyvinyl acetates are typically used in bubble gum base, polyisoprene, polyethylene, vinyl acetate-vinyl laurate copolymer e.g. having a vinyl laurate content of about 5 to 50% by weight such as 10 to 45% by weight of the copolymer, and combinations hereof.

Examples of natural resins are: Natural rosin esters, often referred to as ester gums including as examples glycerol esters of partially hydrogenated rosins, glycerol esters of polymerized rosins, glycerol esters of partially dimerized rosins, glycerol esters of tall oil rosins, pentaerythritol esters of partially hydrogenated rosins, methyl esters of rosins, partially hydrogenated methyl esters of rosins, pentaerythritol esters of rosins, synthetic resins such as terpene resins derived from alpha-pinene, beta-pinene, and/or d-limonene, and natural terpene resins.

It is common in the industry to combine in a gum base a synthetic elastomer having a high molecular weight and a synthetic elastomer having a low molecular weight. Examples of such combinations of are polyisobutylene and styrene-butadiene, polyisobutylene and polyisoprene, polyisobutylene and isobutylene-isoprene copolymer (butyl rubber) and a combination of polyisobutylene, styrene-butadiene copolymer and isobutylene isoprene copolymer, and all of the above individual synthetic polymers in admixture with polyvinyl acetate, vinyl acetate-vinyl laurate copolymers, respectively and mixtures thereof.

According to an advantageous embodiment of the invention, the homopolymer is a polyester.

According to an embodiment of the invention, the polymerization process to obtain the biodegradable homopolymer or further synthetic polymers, which is applied in the chewing gum of the present invention, may be initiated by an initiator such as a polyfunctional alcohol, amine or other molecules or compounds with multiple hydroxyl or other reactive groups or mixtures thereof.

According to an embodiment of the invention, examples of suitable multifunctional initiators include but are not limited to glycerol, trimethylolpropane, pentaerythritol, dipentaerythritol, and ethoxylated or propoxylated polyamines.

Furthermore, in a preferred embodiment of the invention, the initiator may be di-functional, and examples of applicable di-functional initiators include di-functional alcohols, and non-limiting examples include 1,2-propane diol, 1,3-butane diol, other alkane diols, ethylene glycol, generally alcohols having two hydroxyl groups, and other di-functional compounds capable of initiating a ring-opening polymerization.

According to an embodiment of the invention, the fraction of initiators in the biodegradable polymer being difunctional or higher functional may be regulated, whereby the degree of linearity and branching may be controlled.

In an embodiment of the invention, the difunctional initiators comprise at least 50 mol % of the total content of initiator molecules applied. Hereby, a considerable liniarity may be introduced in the biodegradable polymer according to the present invention, and a certain desired crystallinity may be obtained. Hereby, the biodegradable polyester polymer may gain very suitable properties as elastomer plasticizer, and hence an advantageous biodegradable resin may be provided in the chewing gum of the present invention. To increase the liniarity to improve the crystallinity, plasticizing properties and robustness of the chewing gum in an embodiment of the invention, the content of difunctional initiators may be raised to e.g. 60%, 70%, 80%, 90%, or about 100% of the total content of moles initiator molecules applied.

Accordingly, a substantially linear polyester polymer may according to an embodiment of the invention comprise above e.g. 50 or 80 percent linear polymer chains.

The biodegradable resinous homopolymers of the present invention are preferably obtainable by ring-opening polymerization. However, the method of production is not limiting for the scope of the present invention. As an example, ring-opening polymerization of lactide is more commonly used as production method than polycondensation of lactic acid (e.g. α-hydroxypropionic acid). This, however, is mainly a matter of process conditions and ease of production. As concerns the resulting polymers, they may be provided with substantially the same composition and properties and being equally applicable in chewing gum according to the present invention. The naming of such polymers is often regarded inter-changeable, thus the names poly(lactide) and poly (lactic acid) may be used for the same polymer.

Useful polymers, which may be applied as elastomers in the chewing gum of the present invention, may generally be prepared by step-growth polymerization of di-, tri- or higher-functional alcohols with di-, tri- or higher-functional aliphatic or aromatic carboxylic acids or esters thereof. Likewise, also hydroxy acids or anhydrides and halides of polyfunctional carboxylic acids may be used as monomers. The polymerization may involve direct polyesterification or transesterification and may be catalyzed.

Because polyfunctional carboxylic acids in general are high-melting solids that have very limited solubility in the polycondensation reaction medium, esters or anhydrides of the polyfunctional carboxylic acids are often used to overcome this limitation. Furthermore, polycondensations involving carboxylic acids or anhydrides produce water as the condensate, which requires high temperatures to be driven off. Thus, polycondensations involving transesterification of the ester of a polyfunctional acid are often the preferred process. For example, the dimethyl ester of terephthalic acid may be used instead of terephthalic acid itself. In this case, methanol rather than water is condensed, and the former can be driven off more easily than water. Usually, the reaction is carried out in the bulk (no solvent) and high temperatures and vacuum are used to remove the by-product and drive the reaction to completion.

Specific examples of aliphatic polyfunctional carboxylic acids, which may be useful in the preparation of an elastomer applied in the chewing gum of the present invention, include oxalic, malonic, citric, succinic, malic, tartaric, fumaric, maleic, glutaric, glutamic, adipic, glucaric, pimelic, suberic, azelaic, sebacic, dodecanedioic acid, etc. Likewise, specific examples of aromatic polyfunctional carboxylic acids may be terephthalic, isophthalic, phthalic, trimellitic, pyromellitic and naphthalene 1,4-, 2,3-, 2,6-dicarboxylic acids and the like.

For the purpose of illustration and not limitation, some examples of carboxylic acid derivatives, which may be used for preparation of the elastomer used in the chewing gum of the present invention, include hydroxy acids such as 3-hydroxy propionic acid and 6-hydroxycaproic acid and anhydrides, halides or esters of acids, for example dimethyl or diethyl esters, corresponding to the already mentioned acids, which means esters such as dimethyl or diethyl oxalate, malonate, succinate, fumarate, maleate, glutarate, adipate, pimelate, suberate, azelate, sebacate, dodecanedioate, terephthalate, isophthalate, phthalate, etc. Generally speaking, methyl esters are sometimes more preferred than ethyl esters due to the fact that higher boiling alcohols are more difficult to remove than lower boiling alcohols. The usually preferred polyfunctional alcohols contain 2 to 100 carbon atoms as for instance polyglycols and polyglycerols.

In the polymerization of an elastomer for use in the chewing gum of the present invention, some applicable examples of alcohols, which may be employed as such or as derivatives thereof, include polyols such as ethylene glycol, 1,2-propanediol, 1,3-propanediol, 1,3-butanediol, 1,4-butanediol, 1,6-hexanediol, diethylene glycol, 1,4-cyclohexanediol, 1,4-cyclohexanedimethanol, neopentyl glycol, glycerol, trimethylolpropane, pentaerythritol, sorbitol, mannitol, etc.

Generally, the elastomer polymers used in the chewing gum of the present invention may be homopolymers, copolymers or terpolymers, including graft- and block-polymers.

Further suitable examples of additional environmentally or biologically degradable chewing gum base polymers, which may be applied in accordance with the gum base of the present invention, include degradable polyesters, polycarbonates, polyester amides, polypeptides, homopolymers of amino acids such as polylysine, and proteins including derivatives hereof such as e.g. protein hydrolysates including a zein hydrolysate.

In accordance with the general principles in manufacturing a chewing gum within the scope of the invention, variations of different suitable ingredients are listed and explained below.

The chewing gum according to the invention may comprise coloring agents. According to an embodiment of the invention, the chewing gum may comprise color agents and whiteners such as FD&C-type dyes and lakes, fruit and vegetable extracts, titanium dioxide and combinations thereof.

Further useful chewing gum base components include antioxidants, e.g. butylated hydroxytoluene (BHT), butyl hydroxyanisol (BHA), propylgallate and tocopherols, and preservatives.

In an embodiment of the invention, the chewing gum comprises softeners in an amount of about 0 to about 18% by weight of the chewing gum, more typically about 0 to about 12% by weight of the chewing gum.

Waxes may be optional depending on the properties of the individual formulations. Petroleum waxes aid in the curing of the finished confectionery product made from the polymer system as well as improve shelf-life and texture. Wax crystal size influences the release of flavor. Those waxes high in iso-alkanes have a smaller crystal size than those waxes high in normal-alkanes, especially those with normal-alkanes of carbon numbers less than 30. The smaller crystal size allows slower release of flavor since there is more hindrance of the flavor's escape from this wax versus a wax having larger crystal sizes. The compatibility of polymer systems made using normal-alkanic waxes is less when compared to polymer systems made with iso-alkanic waxes.

Waxes and fats may moreover be used for the adjustment of the consistency and for softening of the chewing gum base when preparing chewing gum bases.

Petroleum wax (refined paraffin and microcrystalline wax) and paraffin wax is composed of mainly straight-chained normal-alkanes and branched iso-alkanes. The ratio of normal-alkanes to iso-alkanes varies.

The normal-alkanic waxes typically have carbon chain lengths >C-18 but the lengths are not predominantly longer than C-30. The branched and ring structures are located near the end of the chain for those waxes that are predominantly normal-alkanic. The viscosity of normal-alkanic waxes is <10 mm2/s (at 100 °C) and the combined number average molecular weight is <600 g/mole.

The iso-alkanic waxes typically have carbon lengths that are predominantly greater than C-30. The branched chains and ring structures are located randomly along the carbon chain in those waxes that are predominantly iso-alkanic. The viscosity of iso-alkanic waxes is greater than 10 mm2/s (at 100 °C) and the combined number average molecular weight is >600 g/mole.

Synthetic waxes are produced by means atypical of petroleum wax production and thus are not considered petroleum wax. The synthetic waxes may include waxes containing branched alkanes and copolymerized with monomers such as but not limited to propylene and polyethylene and Fischer Tropsch type waxes. Polyethylene wax is a synthetic wax containing alkane units of varying lengths having attached thereto ethylene monomers.

The natural waxes may include rice bran wax, bees' wax, carnauba wax or candelilla wax.

In connection with the present invention, any conventionally used and suitable type of wax and fat may be used, such as for instance rice bran wax, polyethylene wax, petroleum wax (refined paraffin and microcrystalline wax), paraffin, beeswax, carnauba wax, candelilla wax, cocoa butter, degreased cocoa powder and any suitable oil or fat, as e.g. completely or partially hydrogenated vegetable oils or completely or partially hydrogenated animal fats.

Softeners/emulsifiers may according to the invention be added both in the chewing gum and the gum base.

The selection of softeners has an influence on the softness of the base. Softeners modify the texture, cause the hydrophobic and hydrophilic components of the base to be miscible, and may further plasticize the synthetic polymers of the polymer system. The emulsifiers, which belong to the group of softeners, provide the polymer system with water-binding properties, which confer to the polymer system a pleasant smooth surface and reduce its adhesive properties.

Softeners suitable for use in the polymer system include triglycerides of non-hydrogenated, partially hydrogenated and fully hydrogenated vegetable oils and tallow, cocoa butter and degreased cocoa powder and in addition to these the emulsifiers.

The group of triglycerides include cottonseed, palm, palm kernel, coconut, safflower, rapeseed, sunflower, tallow, soybean, cocoa butter, medium chained triglycerides and the like.

The caproic, caprylic, capric, myristic, lauric and palmitic fatty acids of the triglycerides tend to plasticize the synthetic elastomers more than triglycerides containing predominantly stearic fatty acid.

To the group of emulsifiers belong the monoglycerides, diglycerides, acetylated mono and diglycerides, distilled mono- and diglycerides, glycerol monostearate, propylene glycol monostearate, Na-, K-, Mg- and Ca-stearates, glycerol triacetate, fatty acid monoglycerides (e.g. stearic, palmitic, oleic and linoleic acids), lactic acid esters and acetic acid esters of mono- and diglycerides, sugar esters of edible fatty acids also referred to as sucrose polyesters including those disclosed in WO 00/25598 hereby included by reference, lecithin and hydroxylated lecithin, most of these may contain triglyceride levels less than 2 percent by weight from their manufacturing processing,

The softeners including the emulsifiers may be used alone or at least two or more in combination.

Fillers used in polymer system modify the texture of the polymer system and aid in processing. Particle size has an effect on cohesiveness, density and processing characteristics of the polymer system and its compounding. The smaller the particle size, the more dense and cohesive the final polymer system. Also, by selecting fillers based on their particle size distribution, initial mass compounding may be varied, thus allowing alteration of the compounding characteristics of the initial mass during polymer system processing and ultimately the final chew characteristics of gums made from these polymer systems.

Fillers suitable for use in the polymer system include magnesium and calcium carbonate, ground limestone and silicate types such as magnesium and aluminum silicate, kaolin and clay, aluminum oxide, silicium oxide, talc, as well as titanium oxide, mono-, di- and tricalcium phosphate, sodium sulphate, cellulose polymers such as ethyl, methyl and wood or mixtures thereof.

Talc filler may be used in the polymer system and confectionery product of the present invention that may come in contact with or employ acid flavors or provide an acidic environment needed to prevent degradation of an artificial sweetener by reacting with calcium carbonate type fillers. Mean particle size for calcium carbonate and talc fillers typically range from about 0.1 micron to about 15 microns.

The fillers may also include natural organic fibers such as fruit vegetable fibers, grain, rice, cellulose and combinations thereof.

In an embodiment of the invention, the chewing gum comprises filler in an amount of about 0 to about 50% by weight of the chewing gum, more typically about 5 to about 20% by weight of the chewing gum.

In addition to a, typically, water insoluble gum base portion, a typical chewing gum includes a water soluble bulk portion and one or more flavoring agents. The water-soluble portion may include bulk sweeteners, high intensity sweeteners, flavoring agents, softeners, emulsifiers, colors, acidulants, fillers, antioxidants, and other components that provide desired attributes.

Suitable bulk sweeteners include both sugar and non-sugar sweetening components. Bulk sweeteners typically constitute from about 5 to about 95% by weight of the chewing gum, more typically about 20 to about 80% by weight such as 30 to 60% by weight of the gum.

Useful sugar sweeteners are saccharide-containing components commonly known in the chewing gum art including, but not limited to, sucrose, dextrose, maltose, dextrins, trehalose, D-tagatose, dried invert sugar, fructose, levulose, galactose, corn syrup solids, and the like, alone or in combination.

Sorbitol can be used as a non-sugar sweetener. Other useful non-sugar sweeteners include, but are not limited to, other sugar alcohols such as mannitol, xylitol, hydrogenated starch hydrolysates, maltitol, isomalt, erythritol, lactitol and the like, alone or in combination.

High-intensity artificial sweetening agents can also be used alone or in combination with the above sweeteners. Preferred high-intensity sweeteners include, but are not limited to sucralose, aspartame, salts of acesulfame, alitame, neotame, twinsweet, saccharin and its salts, cyclamic acid and its salts, glycyrrhizin, dihydrochalcones, thaumatin, monellin, stevioside and the like, alone or in combination. In order to provide longer lasting sweetness and flavor perception, it may be desirable to encapsulate or otherwise control the release of at least a portion of the artificial sweetener. Techniques such as wet granulation, wax granulation, spray drying, spray chilling, fluid bed coating, conservation, encapsulation in yeast cells and fiber extrusion may be used to achieve the desired release characteristics. Encapsulation of sweetening agents can also be provided using another chewing gum component such as a resinous compound.

Usage level of the high intensity artificial sweetener will vary considerably and will depend on factors such as potency of the sweetener, rate of release, desired sweetness of the product, level and type of flavor used and cost considerations. Thus, the active level of high potency artificial sweetener may vary from about 0 to about 8% by weight, preferably 0.001 to about 5% by weight. When carriers used for encapsulation are included, the usage level of the encapsulated sweetener will be proportionately higher.

Combinations of sugar and/or non-sugar sweeteners can be used in the chewing gum formulation processed in accordance with the invention. Additionally, the softener may also provide additional sweetness such as aqueous sugar or alditol solutions.

If a low-calorie gum is desired, a low-caloric bulking agent can be used. Examples of low caloric bulking agents include polydextrose, Raftilose, Raftilin, fructooligosaccharides (NutraFlora^{®}), palatinose oligosaccharides; guar gum hydrolysates (e.g. Sun Fiber^{®}) or indigestible dextrins (e.g. Fibersol^{®}). However, other low-calorie bulking agents can be used.

The chewing gum according to the present invention may contain aroma agents and flavoring agents including natural and synthetic flavorings e.g. in the form of natural vegetable components, essential oils, essences, extracts, powders, including acids and other substances capable of affecting the taste profile. Examples of liquid and powdered flavorings include coconut, coffee, chocolate, vanilla, grape fruit, orange, lime, menthol, liquorice, caramel aroma, honey aroma, peanut, walnut, cashew, hazelnut, almonds, pineapple, strawberry, raspberry, tropical fruits, cherries, cinnamon, peppermint, wintergreen, spearmint, eucalyptus, and mint, fruit essence such as from apple, pear, peach, strawberry, apricot, raspberry, cherry, pineapple, and plum essence. The essential oils include peppermint, spearmint, menthol, eucalyptus, clove oil, bay oil, anise; thyme, cedar leaf oil, nutmeg, and oils of the fruits mentioned above.

The chewing gum flavor may be a natural flavoring agent, which is freeze-dried, preferably in the form of a powder, slices or pieces or combinations thereof. The particle size may be less than 3 mm, less than 2 mm or more preferred less than 1 mm, calculated as the longest dimension of the particle. The natural flavoring agent may in a form where the particle size is from about 3 µm to 2 mm, such as from 4 µm to 1 mm. Preferred natural flavoring agents include seeds from fruit e.g. from strawberry, blackberry and raspberry.

Various synthetic flavors, such as mixed fruit flavors may also be used in the present chewing gum centers. As indicated above, the aroma agent may be used in quantities smaller than those conventionally used. The aroma agents and/or flavors may be used in the amount from 0.01 to about 30% by weight of the final product depending on the desired intensity of the aroma and/or flavor used. Preferably, the content of aroma/flavor is in the range of 0.2 to 3% by weight of the total composition.

In an embodiment of the invention, the flavoring agents comprise natural and synthetic flavorings in the form of natural vegetable components, essential oils, essences, extracts, powders, including acids and other substances capable of affecting the taste profile.

Further chewing gum ingredients, which may be included in the chewing gum according to the present invention, include surfactants and/or solubilisers, especially when pharmaceutically or biologically active ingredients are present. As examples of types of surfactants to be used as solubilisers in a chewing gum composition according to the invention, reference is made to H.P. Fiedler, Lexikon der Hilfstoffe für Pharmacie, Kosmetik und Angrenzende Gebiete, pages 63-64 (1981) and the lists of approved food emulsifiers of the individual countries. Anionic, cationic, amphoteric or non-ionic solubilisers can be used. Suitable solubilisers include lecithin, polyoxyethylene stearate, polyoxyethylene sorbitan fatty acid esters, fatty acid salts, mono and diacetyl tartaric acid esters of mono and diglycerides of edible fatty acids, citric acid esters of mono and diglycerides of edible fatty acids, saccharose esters of fatty acids, polyglycerol esters of fatty acids, polyglycerol esters of interesterified castor oil acid (E476), sodium stearoyllatylate, sodium lauryl sulfate and sorbitan esters of fatty acids and polyoxyethylated hydrogenated castor oil (e.g. the product sold under the trade name CREMOPHOR), block copolymers of ethylene oxide and propylene oxide (e.g. products sold under trade names PLURONIC and POLOXAMER), polyoxyethylene fatty alcohol ethers, polyoxyethylene sorbitan fatty acid esters, sorbitan esters of fatty acids and polyoxyethylene steraric acid esters.

Particularly suitable solubilisers are polyoxyethylene stearates, such as for instance polyoxyethylene(8)stearate and polyoxyethylene(40)stearate, the polyoxyethylene sorbitan fatty acid esters sold under the trade name TWEEN, for instance TWEEN 20 (monolaurate), TWEEN 80 (monooleate), TWEEN 40 (monopalmitate), TWEEN 60 (monostearate) or TWEEN 65 (tristearate), mono and diacetyl tartaric acid esters of mono and diglycerides of edible fatty acids, citric acid esters of mono and diglycerides of edible fatty acids, sodium stearoyllatylate, sodium laurylsulfate, polyoxyethylated hydrogenated castor oil, blockcopolymers of ethylene oxide and propyleneoxide and polyoxyethylene fatty alcohol ether. The solubiliser may either be a single compound or a combination of several compounds. In the presence of an active ingredient, the chewing gum may preferably also comprise a carrier known in the art.

Emulsifiers, which are used as softeners may include tallow, hydrogenated tallow, hydrogenated and partially hydrogenated vegetable oils, cocoa butter, glycerol monostearate, glycerol triacetate, lecithin, mono-, di-and triglycerides, acetylated monoglycerides, fatty acids (e.g. stearic, palmitic, oleic and linoleic acids), and combinations thereof.

According to an embodiment of the invention, the chewing gum may comprise a pharmaceutically, cosmetically or biologically active substance. Examples of such active substances, a comprehensive list of which is found e.g. in WO 00/25598, which is incorporated herein by reference,

The active agents to be used in connection with the present invention may be any substance desired to be released from the chewing gum. If an accelerated rate of release is desired, corresponding to the effect obtained for the flavor, the primary substances are those with limited water solubility, typically below 10g /100 ml including substances which are entirely water insoluble. Examples are medicines, dietary supplements, oral compositions, anti-smoking agents, highly potent sweeteners, pH adjusting agents, etc.

Further examples of active ingredients include paracetamol, benzocaine, cinnarizine, menthol, carvone, caffeine, chlorhexidine-di-acetate, cyclizine hydrochloride, 1,8-cineol, nandrolone, miconazole, mystatine, aspartame, sodium fluoride, nicotine, saccharin, cetylpyridinium chloride, other quaternary ammoniumcompounds, vitamin E, vitamin A, vitamin D, glibenclamide or derivatives thereof, progesterone, acetylsalicylic acid, dimenhydrinate, cyclizine, metronidazole, sodium hydrogencarbonate, the active components from ginkgo, the active components from propolis, the active components from ginseng, methadone, oil of peppermint, salicylamide, hydrocortisone or astemizole.

Examples of active agents in the form of dietary supplements are for instance salts and compounds having the nutritive effect of vitamin B2 (riboflavin), B12, folic acid, niacine, biotine, poorly soluble glycerophosphates, amino acids, the vitamins A, D, E and K, minerals in the form of salts, complexes and compounds containing calcium, phosphorus, magnesium, iron, zinc, copper, iodine, manganese, chromium, selenium, molybdenum, potassium, sodium or cobalt.

Furthermore, reference is made to lists of nutritients accepted by the authorities in different countries such as for instance US code of Federal Regulations, Title 21, Section 182.5013.182 5997 and 182.8013-182.8997.

Examples of active agents in the form of compounds for the care or treatment of the oral cavity and the teeth are for instance bound hydrogen peroxide and compounds capable of releasing urea during chewing.

Examples of active agents in the form of antiseptics are for instance salts and compounds of guanidine and biguanidine (for instance chlorhexidine diacetate) and the following types of substances with limited water-solubility: quaternary ammonium compounds (for instance ceramine, chloroxylenol, crystal violet, chloramine), aldehydes (for instance paraformaldehyde), compounds of dequaline, polynoxyline, phenols (for instance thymol, para chlorophenol, cresol) hexachlorophene, salicylic anilide compounds, triclosan, halogenes (iodine, iodophores, chloroamine, dichlorocyanuric acid salts), alcools (3,4 dichlorobenzyl alcohol, benzyl alcohol, phenoxyethanol, phenylethanol), cf. furthermore Martindale, The Extra Pharmacopoeia, 28th edition, page 547-578; metal salts, complexes and compounds with limited water-solubility, such as aluminum salts, (for instance aluminum potassium sulfate AIK (S04) 2, 12H20) and furthermore salts, complexes and compounds of boron, barium, strontium, iron, calcium, zinc, (zinc acetate, zinc chloride, zinc gluconate), copper (copper chloride, copper sulfate), lead, silver, magnesium, sodium, potassium, lithium, molybdenum, vanadium should be included; other compositions for the care of mouth and teeth: for instance; salts, complexes and compounds containing fluorine (such as sodium fluoride, sodiummonofluorophosphate, aminofluorides, stannous fluoride), phosphates, carbonates and selenium.

Cf. furthermore J. Dent. Res. Vol. 28 No. 2, page 160-171,1949, wherein a wide range of tested compounds are mentioned.

Examples of active agents in the form of agents adjusting the pH in the oral cavity include for instance: acceptable acids, such as adipinic acid, succinic acid, fumaric acid, or salts thereof or salts of citric acid, tartaric acid, malic acid, acetic acid, lactic acid, phosphoric acid and glutaric acid and acceptable bases, such as carbonates, hydrogen carbonates, phosphates, sulfates or oxides of sodium, potassium, ammonium, magnesium or calcium, especially magnesium and calcium.

Examples of active agents in the form of anti-smoking agents include for instance: nicotine, tobacco powder or silver salts, for instance silver acetate, silver carbonate and silver nitrate.

Further examples of active agents are medicines of any type.

Examples of active agents in the form of medicines include caffeine, salicylic acid, salicyl amide and related substances (acetylsalicylic acid, choline salicylate, magnesium salicylate, sodium salicylate), paracetamol, salts of pentazocine (pentazocine hydrochloride and pentazocinelactate), buprenorphine hydrochloride, codeine hydrochloride and codeine phosphate, morphine and morphine salts (hydrochloride, sulfate, tartrate), methadone hydrochloride, ketobemidone and salts of ketobemidone (hydrochloride), beta-blockers, (propranolol), calcium antagonists, verapamil hydrochloride, nifedinpine as well as suitable substances and salts thereof mentioned in Pharm. Int., Nov. 85, pages 267-271, Barney H. Hunter and Robert L. Talbert, nitroglycerine, erythrityl tetranitrate, strychnine and salts thereof, lidocaine, tetracaine hydrochloride, etorphine hydrochloride, atropine, insulin, enzymes (for instance papain, trypsin, amyloglucosidase. glucoseoxidase, streptokinase, streptodornase, dextranase, alpha amylase), polypeptides (oxytocin, gonadorelin, (LH. RH), desmopressin acetate (DDAVP), isoxsuprine hydrochloride, ergotamine compounds, chloroquine (phosphate, sulfate), isosorbide, demoxytocin, heparin.

Other active ingredients include beta-lupeol, Letigen, Sildenafil citrate and derivatives thereof.

Dental products include Carbami, CPP Caseine Phospho Peptide; Chlorhexidine, Chlorhexidine di acetate, Chlorhexidine Chloride, Chlorhexidine di gluconate, Hexetedine, Strontium chloride, Potassium Chloride, Sodium bicarbonate, Sodium carbonate, Fluor containing ingredients, Fluorides, Sodium fluoride, Aluminum fluoride, Ammonium fluoride, Calcium fluoride, Stannous fluoride, Other fluor containing ingredients Ammonium fluorosilicate, Potasium fluorosilicate, Sodium fluorosilicate, Ammonium monofluorphosphate, Calcium monofluorphosphate, Potassium monofluorphosphate, Sodium monofluorphosphate, Octadecentyl Ammonium fluoride, Stearyl Trihydroxyethyl Propylenediamine Dihydrofluoride, Vitamins include A, B1, B2, B6, B12, Folic acid, niacin, Pantothensyre, biotine, C, D, E, K.

Minerals include Calcium, phosphor, magnesium, iron, Zink, Cupper, lod, Mangan, Crom, Selene, Molybden. Other active ingredients include:Q10@, enzymes. Natural drugs including Ginkgo Biloba, ginger, and fish oil. The invention also relates to use of migraine drugs such as Serotonin antagonists: Sumatriptan, Zolmitriptan, Naratriptan, Rizatriptan, Eletriptan; nausea drugs such as Cyclizin, Cinnarizin, Dimenhydramin, Difenhydrinat; hay fever drugs such as Cetrizin, Loratidin, pain relief drugs such as Buprenorfin, Tramadol, oral disease drugs such as Miconazol, Amphotericin B, Triamcinolonaceton; and the drugs Cisaprid, Domperidon, Metoclopramid.

Active ingredients may comprise the below-mentioned compounds or derivates thereof but are not limited thereto: Acetaminophen, Acetylsalicylic acid Buprenorphine Bromhexin Celcoxib Codeine, Diphenhydramin, Diclofenac, Etoricoxib, Ibuprofen, Indometacin, Ketoprofen, Lumiracoxib, Morphine, Naproxen, Oxycodon, Parecoxib, Piroxicam, Pseudoefedrin, Rofecoxib, Tenoxicam, Tramadol, Valdecoxib, Calciumcarbonat, Magaldrate, Disulfiram, Bupropion, Nicotine, Azithromycin, Clarithromycin, Clotrimazole, Erythromycin, Tetracycline, Granisetron, Ondansetron, Prometazin, Tropisetron, Brompheniramine, Ceterizin, leco-Ceterizin, Chlorcyclizine, Chlorpheniramin, Chlorpheniramin, Difenhydramine, Doxylamine, Fenofenadin, Guaifenesin, Loratidin, des-Loratidin, Phenyltoloxamine, Promethazin, Pyridamine, Terfenadin, Troxerutin, Methyldopa, Methylphenidate, Benzalcon. Chloride, Benzeth. Chloride, Cetylpyrid. Chloride, Chlorhexidine, Ecabet-sodium, Haloperidol, Allopurinol, Colchinine, Theophylline, Propanolol, Prednisolone, Prednisone, Fluoride, Urea, Miconazole, Actot, Glibenclamide, Glipizide, Metformin, Miglitol, Repaglinide, Rosiglitazone, Apomorfin, Cialis, Sildenafil, Vardenafil, Diphenoxylate, Simethicone, Cimetidine, Famotidine, Ranitidine, Ratinidine, cetrizin, Loratadine, Aspirin, Benzocaine, Dextrometorphan, Ephedrine, Phenylpropanolamine, Pseudoephedrine, Cisapride, Domperidone, Metoclopramide, Acyclovir, Dioctylsulfosucc., Phenolphtalein, Almotriptan, Eletriptan, Ergotamine, Migea, Naratriptan, Rizatriptan, Sumatriptan, Zolmitriptan, Aluminum salts, Calcium salts, Ferro salts, Silver salts, Zinc-salts, Amphotericin B, Chlorhexidine, Miconazole, Triamcinolonacetonid, Melatonine, Phenobarbitol, Caffeine, Benzodiazepiner, Hydroxyzine, Meprobamate, Phenothiazine, Buclizine, Brometazine, Cinnarizine, Cyclizine, Difenhydramine, Dimenhydrinate, Buflomedil, Amphetamine, Caffeine, Ephedrine, Orlistat, Phenylephedrine, Phenylpropanolamin, Pseudoephedrine, Sibutramin, Ketoconazole, Nitroglycerin, Nystatin, Progesterone, Testosterone, Vitamin B12, Vitamin C, Vitamin A, Vitamin D, Vitamin E, Pilocarpin, Aluminumaminoacetat, Cimetidine, Esomeprazole, Famotidine, Lansoprazole, Magnesiumoxide, Nizatide and or Ratinidine.

In one embodiment of the invention, the flavor may be used as taste masking in chewing gum comprising active ingredients, which by themselves have undesired taste or which alter the taste of the formulation.

The chewing gum may optionally contain usual additives, such as binding agents, acidulants, fillers, coloring agents, preservatives, and antioxidants.

Materials to be used for the above-mentioned encapsulation methods for sweeteners might e.g. include Gelatine, Wheat protein, Soya protein, Sodium caseinate, Caseine, Gum arabic, Mod. starch, Hydrolyzed starches (maltodextrines), Alginates, Pectin, Carregeenan, Xanthan gum, Locus bean gum, Chitosan, Bees wax, Candelilla wax, Carnauba wax, Hydrogenated vegetable oils, Zein and/or Sucrose.

In general, chewing gum may be manufactured by sequentially adding the various chewing gum ingredients to a commercially available mixer known in the art.

A mixing of chewing gum and gum base may generally be performed by a batch or a continuous processing technique. An example of basic applicable mixing principles is explained below. After the initial ingredients have been thoroughly mixed, the chewing gum mass is discharged from the mixer and shaped into the desired form such as by rolling into sheets and cutting into sticks, extruded into chunks or casting into pellets.

Generally, the ingredients may be mixed by first melting the gum base and adding it to the running mixer. Colors, active agents and/or emulsifiers may also be added at this time. A softener such as glycerin may also be added at this time, along with syrup and a portion of the bulking agent/sweetener. Further portions of the bulking agent/sweetener may then be added to the mixer. A flavoring agent is typically added with the final portion of the bulking agent/sweetener. A high-intensity sweetener is preferably added after the final portion of bulking agent and flavor has been added.

The entire mixing procedure typically takes from five to fifteen minutes, but longer mixing times may sometimes be required. Those skilled in the art will recognize that many variations of the above described procedure may be followed. Including the one-step method described in US patent application 2004/0115305 hereby incorporated as reference.

The final chewing gums are formed by extrusion, compression, rolling and may be centre filled with liquids and/or solids in any form.

The chewing gum according to the invention may be formed as conventional pellets, centre filled, etc.

The chewing gum according to the present invention may also be provided with an outer coating, which may be a hard coating, a soft coating, a film coating, or a coating of any type that is known in the art, or a combination of such coatings. The coating may typically constitute 0.1 to 75 percent by weight of a coated chewing gum piece.

One preferred outer coating type is a hard coating, which term is including sugar coatings and sugar-free (or sugarless) coatings and combinations thereof. The object of hard coating is to obtain a sweet, crunchy layer, which is appreciated by the consumer and to protect the gum centers. In a typical process of providing the chewing gum centers with a protective sugar coating the gum centers are successively treated in suitable coating equipment with aqueous solutions of crystallizable sugar such as sucrose or dextrose, which, depending on the stage of coating reached, may contain other functional ingredients, e.g. fillers, colors, etc.

In one presently preferred embodiment, the coating agent applied in a hard coating process is a sugarless coating agent, e.g. a polyol including as examples sorbitol, maltitol, mannitol, xylitol, erythritol, lactitol and isomalt or e.g. a mono- di-saccharide including as example trehalose.

Or alternatively a sugar free soft coating e.g. comprising alternately applying to the centers a syrup of a polyol or a mono- di-saccharide, including as examples sorbitol, maltitol, mannitol, xylitol, erythritol, lactitol, isomalt and trehalose.

In further useful embodiments a film coating is provided by film-forming agents such as a cellulose derivative, a modified starch, a dextrin, gelatine, zein, shellec, gum arabic, a vegetable gum, a synthetic polymer, etc. or a combination thereof.

In an embodiment of the invention, the outer coating comprises at least one additive component selected from the group comprising of a binding agent, a moisture-absorbing component, a film-forming agent, a dispersing agent, an antisticking component, a bulking agent, a flavoring agent, a coloring agent, a pharmaceutically or cosmetically active component, a lipid component, a wax component, a sugar, an acid

A coated chewing gum center according to the invention may have any form, shape or dimension that permits the chewing gum center to be coated using any conventional coating process.

The gum centre of coated chewing gum element according to the invention can have any form, shape or dimension that permits the chewing gum centre to be coated using any conventional coating process. Accordingly, the gum centre may be e.g. in a form selected from a pellet, a cushion-shaped pellet, a stick, a tablet, a chunk, a pastille, a pill, a ball and a sphere, and typically the weight of a gum center may be 0.5 to 5 grams.

Note that the description, and specifically the claims, designates e.g. 1000 as 1,000 and ½ as 0.5.

The following non-limiting examples illustrate the manufacturing of a chewing gum including elastomers which are not according to the invention.

### EXAMPLE 1

### Preparation of polyester elastomer obtained by ring-opening polymerization

An elastomer sample is synthesized within a dry N₂ glove box, as follows. Into a 500 mL resin kettle equipped with overhead mechanical stirrer, 3.143 g pentaerythritol and 0.5752 g Sn(Oct)₂ (2.0 ml of a 1.442gSn(Oct)2/5 mL in methylene chloride) are charged under dry N₂ gas purge. The methylene chloride is allowed to evaporate under the N₂ purge for 15 min. Then ε-caprolactone (1144g, 10 mol), Trimethylene carbonate (31 g, 0.30 mol) and δ-valerolactone (509g, 5.1 mol) are added. The resin kettle is submerged in a 130°C constant temperature oil bath and stirred for 13.9 h. Subsequently the kettle is removed from the oil bath and allowed to cool at room temperature. The solid, elastic product is removed in small pieces using a knife, and placed into a plastic container.
Characterization of the product indicates Mₙ = 56,000 g/mol and M_{w} = 98,700 g/mol (gel permeation chromatography with online MALLS detector). And Tg = -58.9°C (DSC, heating rate 10°C/min).

### EXAMPLE 2

### Preparation of polyester elastomer obtained by ring-opening polymerization

An elastomer sample is synthesized within a dry N₂ glove box, as follows. Into a 500 mL resin kettle equipped with overhead mechanical stirrer, 3.152 g pentaerythritol and 0.5768 g Sn(Oct)₂ (2.0 ml of a 1.442gSn(Oct)2/5 mL in methylene chloride) are charged under dry N₂ gas purge. The methylene chloride is allowed to evaporate under the N₂ purge for 15 min. Then s-caprolactone (1148g, 10 mol), Trimethylene carbonate (31 g, 0.30 mol) and δ-valerolactone (511g, 5.1 mol) are added. The resin kettle is submerged in a 130°C constant temperature oil bath and stirred for 13.4 h. Subsequently the kettle is removed from the oil bath and allowed to cool at room temperature. The solid, elastic product is removed in small pieces using a knife, and placed into a plastic container.
Characterization of the product indicates Mₙ = 88,800 g/mol and M_{w} = 297,000 g/mol (gel permeation chromatography with online MALLS detector). And Tg = - 59.4°C (DSC, heating rate 10°C/min).

### EXAMPLE 3

### Preparation of polyester resin obtained by ring-opening polymerization

A resin sample is produced using a cylindrical glass, jacketed 10 L pilot reactor equipped with glass stir shaft and Teflon stir blades and bottom outlet. Heating of the reactor contents is accomplished by circulation of silicone oil, thermo stated to 130°C, through the outer jacket. ε-caprolactone (358.87 g, 3.145 mol) and 1,2-propylene glycol (79.87 g, 1.050 mol) are charged to the reactor together with stannous octoate (1.79 g, 4.42 x 10⁻³ mol) as the catalyst and reacting in about 30 min. at 130°C. Then molten D,L-lactide (4.877 kg, 33.84 mol) are added and reaction continued for about 2 hours. At the end of this period, the bottom outlet is opened, and molten polymer is allowed to drain into a Teflon-lined paint can. Characterization of the product indicates Mₙ = 6,000 g/mol and M_{w} = 7,000 g/mol (gel permeation chromatography with online MALLS detector) and Tg = 25-30°C (DSC, heating rate 10°C/min).

### EXAMPLE 4

### Preparation of polyester elastomer obtained by step-growth polymerization

An elastomer sample is produced using a 500 mL resin kettle equipped with an overhead stirrer, nitrogen gas inlet tube, thermometer, and distillation head for removal of methanol. To the kettle are charged 83.50 g (0.43 mole) dimethyl terephthalate, 99.29 g (0.57 mole) dimethyl adipate, 106.60 g (1.005 mole) di(ethylene glycol) and 0.6 g calcium acetate monohydrate. Under nitrogen, the mixture is slowly heated with stirring until all components become molten (120-140°C). Heating and stirring are continued and methanol is continuously distilled. The temperature slowly rises in the range 150-200°C until the evolution of methanol ceases. Heating is discontinued and the content is allowed to cool to about 100°C. The reactor lid is removed and the molten polymer is carefully poured into a receiving vessel.
Characterization of the product indicates Mₙ = 40,000g/mol and M_{w} = 190,000g/mol (gel permeation chromatography with online MALLS detector) and Tg = -30°C (DSC, heating rate 10°C/min).

### Example 5

A homopolymer by NatureWorks^{®} PLA 4060 D (amorph) poly D,L-lactide was provided as a resin. The homopolymer has a Tg of about 56 °C. ( Mn ~100.000)

### Example 6

A homopolymer by NatureWorks^{®} PLA 5500 D (amorph) poly D,L-lactide was provided as a resin. The homopolymer has a Tg of about 50°C (Mn ~ 50.000)

### EXAMPLE 7

### Preparation of gum bases

The process of preparing gum bases is carried out in the following way: The gum base components are added to a mixing kettle provided with mixing means like e.g. horizontally placed Z-shaped arms. The kettle has been preheated to a temperature of about 140°C. The mixture is mixed for 30-120 minutes until the whole mixture becomes homogeneous. The mixture is then discharged into the pan and allowed to cool to room temperature.

Nine different gum bases as shown in table 1 were prepared.

**Table 1: Gum base compositions, components designated by % by weight.**

| Gum base components | Comparative base 001 | Gum base 002 | Gum base 003 | Gum base 004 | Gum base 005 | Gum base 006 | Gum base 007 | Gum base 008 | Gum base 009 |
|---|---|---|---|---|---|---|---|---|---|
| Conventional elastomer | 15 | 15 | 15 | 15 | | | | | |
| Conventional Natural resin | 20 | | | | | | | | |
| Conventional synthetic resin | 20 | | | | | | | | |
| Polyester of Example 1 | | | | | 15 | 15 | | | |
| Polyester of Example 4 | | | | | | | 15 | 15 | 15 |
| Polyester of Example 3 | | 40 | | | 40 | | 40 | | |
| Polyester of Example 5 | | | 40 | | | | | 40 | |
| Polyester of Example 6 | | | | 40 | | 40 | | | 40 |
| Filler | 20 | 20 | 20 | 20 | 20 | 20 | 20 | 20 | 20 |
| Emulsifier | 5 | 5 | 5 | 5 | 5 | 5 | 5 | 5 | 5 |
| Fat | 20 | 20 | 20 | 20 | 20 | 20 | 20 | 20 | 20 |

### EXAMPLE 8

### Preparation of chewing gum

The gum bases of example 7 were used in the preparation of peppermint flavored chewing gum formulations 1001-1009 with the basic formulations shown in table 2 and where gum base 001 is applied for the preparation of chewing gum 1001, gum base 002 is applied for the preparation of chewing gum 1002 and so forth.

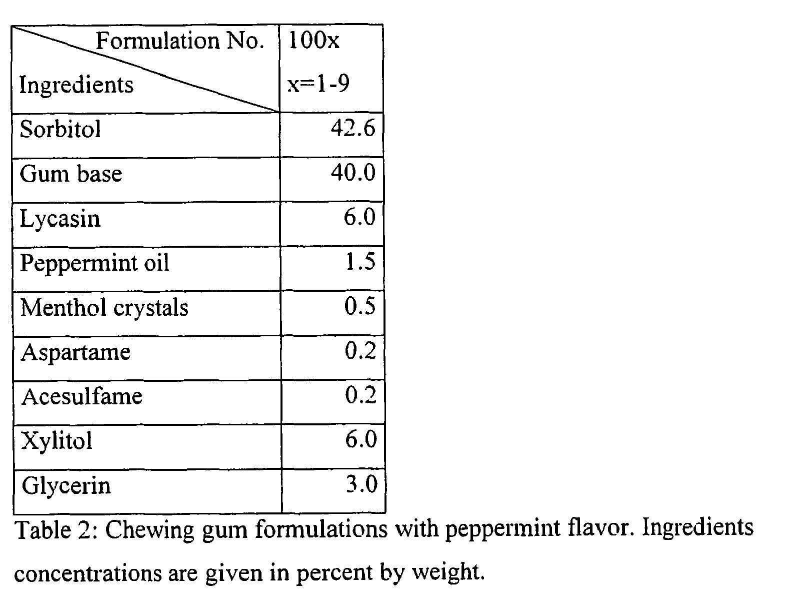

### Example 9:

### Evaluation of the chewing gum of table 2.

A test-setup for the evaluation of non-tack properties of the chewing gums of table 2 was established. The test involved the steps of
- chewing of chewing gum lumps of the chewing gum formulations of table 2 in a chewing machine in 8 minutes,
- fastening of the chewing gum lumps on concrete slabs,
- evaluating the chewing gum lumps in three different controlled climate setups:
   (a) 0 °C
   (b) 21 °C og 55% RH
   (c) 30 °C og 70% RH

The chewing gum lumps were evaluated visually and by attempting removal of the chewing gum lumps by means of a spatula.

It was generally observed that the non-tack properties of the tested samples had an improved non-tackiness compared to the comparative sample 1001 at the low test temperature 0 °C of test (a).

It was furthermore concluded that the chewing gum formulation 1003, 1004, 1006, 1008 and 1009 featured an improved non-tackiness at all temperatures (a), (b) and (c), thereby indicating that the non-tackiness is depending less on environment temperature.

A further test with respect to texture of the chewing gum formulations 1003, 1004, 1006, 1008 and 1009 indicated that the best texture could be obtained by the use of the lowest -molecular weight resin, namely chewing gum samples 1004, 1006, and 1009.

### EXAMPLE 10:

### Preparation of gum bases

A further number of gum bases were prepared according to the process described in example 7 now with a slightly changed composition where the gum bases comprises conventional elastomer and a homopolymer as a resin.

Table 3 illustrated further gum bases 202-209.

**Table 3: Gum base compositions. Component concentrations are given in percent by weight.**

| Gum base components | Gum base 202 | Gum base 203 | Gum base 204 | Gum base 205 | Gum base 206 | Gum base 207 | Gum base 208 | Gum base 209 |
|---|---|---|---|---|---|---|---|---|
| Conventional elastomer | 1 | 5 | 8 | 15 | 30 | 35 | 40 | 45 |
| Polyester of Example 6 | 54 | 50 | 47 | 40 | 25 | 25 | 25 | 10 |
| Resin/elastomer ratio | 54:1 | 10:1 | 47:8 | 40:15 | 25:30 | 25:35 | 25:40 | 10:45 |
| Filler | 20 | 20 | 20 | 20 | 20 | 15 | 10 | 20 |
| Emulsifier | 5 | 5 | 5 | 5 | 5 | 5 | 5 | 5 |
| Fat | 20 | 20 | 20 | 20 | 20 | 20 | 20 | 20 |

### EXAMPLE 11

Chewing gum formulations based on the gum bases of example 10 are illustrated in table 4.

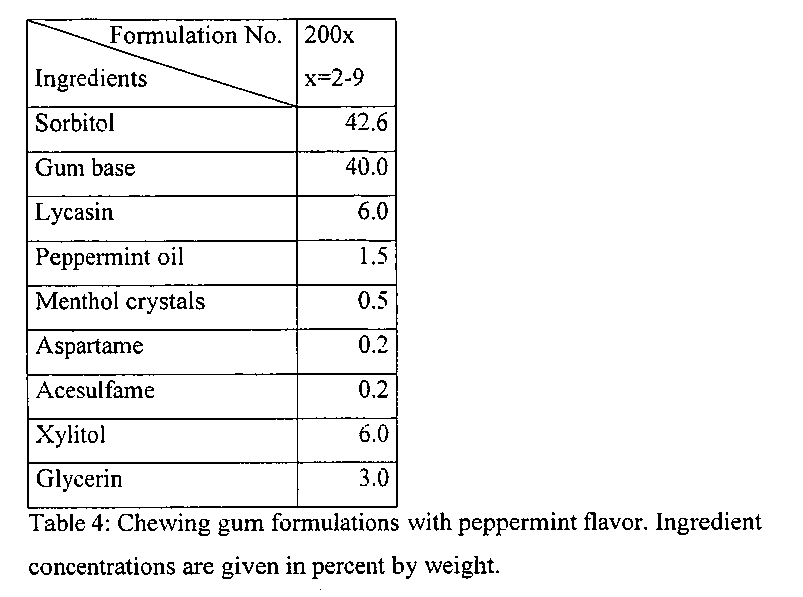

### Example 12:

### Evaluation of the chewing gum of table 4.

The chewing gum 2009 formed on the basis of the gum base 209 is dominated by the elastomer. The elastomer content in the gum base of this chewing gum is about 45% (w/w) and regarded to be too high in combination with the homopolymer but could be compensated by a further softening and modification of the elastomer blend. Specifically, a reduction of the molecular weight could be considered.

It is on the other hand observed that the desired non-tackiness of the chewing gum is inferior when the ratio between the resin and elastomer is lower than about 1:5.

The chewing gum 2002, i.e. the chewing gum formed on the basis of an elastomer content in the gum base of only 1%, lacks the desired chew feel. It is assumed that this lack of the desired chew feel resides in the very low elastomer content.

Chewing gums 2003 to 2008 were regarded acceptable with respect to both chew feel and tackiness.

According to an advantageous embodiment of the invention, the chewing gum may be prepared with about 2-15% by weight of a syrup blend; wherein the syrup blend includes about 25-45% glycerin, about 55-75% hydrogenated starch hydrolysates.

## Claims

1. Non-tack chewing gum comprising chewing gum ingredients,
said chewing gum comprising at least one elastomer and at least one resin,
said at least one resin comprising at least one synthetic homopolymer resin,
said synthetic homopolymer being biodegradable,
the amount of said synthetic homopolymer of said chewing gum being from about ½% to 60% by weight of said chewing gum,
wherein said at least one synthetic homopolymer has a PD (PD: Polydispersity Index) of 1.1 to 20 and
wherein said at least one elastomer comprises butadiene-styrene, isobutylene-isoprene, polyisobutylene, polyisoprene or any combination thereof.

2. Non-tack chewing gum according to claim 1, wherein the amount of said synthetic homopolymer of said chewing gum being from about 2% to 50% by weight of said chewing gum, preferably from about 2% to 30% by weight of said chewing gum.

3. Non-tack chewing gum according to claim 1 or 2,
wherein said synthetic homopolymer is resinous.

4. Non-tack chewing gum according to any of the claims 1-3, wherein the synthetic homopolymer comprises a polyester polymer.

5. Non-tack chewing gum according to any of the claims 1-4, wherein said polyester polymer is obtainable by ring-opening polymerization of cyclic monomers.

6. Non-tack chewing gum according to any of the claims 1-5, wherein said polyester polymer is obtainable by ring-opening polymerization of cyclic monomers selected from the group of cyclic esters and cyclic carbonates.

7. Non-tack chewing gum according to any of the claims 1-6, wherein said polyester polymer is obtainable by ring-opening polymerization of cyclic monomers selected from the group of D,L-lactide, L-lactide, glycolide, ε-caprolactone, δ-valerolactone, trimethylene carbonate (TMC) and dioxanone.

8. Non-tack chewing gum according to any of the claims 1-7, wherein said at least one homopolymer is selected from the group of poly(D,L-lactide) and poly glycolide.

9. Non-tack chewing gum according to any of the claims 1-8, wherein said at least one homopolymer is selected from the group of poly(D,L-lactide) and wherein the ratio between D and L - lactic acid monomers is between about 1:10 and 10:1.

10. Non-tack chewing gum according to any of the claims 1-9, wherein said at least one homopolymer is selected from the group of poly(D,L-lactide) and wherein the ratio between D and L - lactic acid monomers is about 1:1.

11. Non-tack chewing gum according to any of the claims 1-10, wherein said homopolymer comprises a polyester produced through reaction of at least one di- or polyfunctional alcohol or derivative thereof and at least one di- or polyfunctional acid or derivative thereof.

12. Non-tack chewing gum according to any of the claims 1-11, wherein said acid derivative comprises esters, anhydrides or halides of di- or polycarboxylic acids.

13. Non-tack chewing gum according to any of the claims 1-12, wherein said acid derivative comprises methyl or ethyl esters of acids.

14. Non-tack chewing gum according to any of the claims 1-13, wherein said homopolymer comprises a polyester produced through condensation reaction of at least one di- or polyfunctional hydroxy carboxylic acid or derivative thereof.

15. Non-tack chewing gum according to any of the claims 1-14, wherein said at least one homopolymer has a PD of 1.3 to 12.

16. Non-tack chewing gum according to any of the claims 1-15, wherein said homopolymer has a glass transition temperature (Tg) above 20°C, preferably above 30°C and most preferably above about 35 °C.

17. Non-tack chewing gum according to any of the claims 1-16, wherein the molecular weight of said at least one resin is less than 400,000 g/mol Mn.

18. Non-tack chewing gum according to any of the claims 1-17, wherein the molecular weight of said at least one resin is less than 200,000 g/mol Mn.

19. Non-tack chewing gum according to any of the claims 1-18, wherein the molecular weight of said at least one resin is less than 60,000 g/mol Mn.

20. Non-tack chewing gum according to any of the claims 1-19, wherein the molecular weight of said at least one resin is about 60,000 g/mol Mn.

21. Non-tack chewing gum according to any of the claims 1-20, wherein the molecular weight of said at least one resin is within the range of 500 g/mol Mn to 60,000 g/mol Mn.

22. Non-tack chewing gum according to any of the claims 1-21, wherein the molecular weight of said at least one resin is within the range of 5000 g/mol Mn to 30,000 g/mol Mn.

23. Non-tack chewing gum according to any of the claims 1-22, wherein the chewing gum comprises at least one resin in the amount of at least 5% by weight of the chewing gum.

24. Non-tack chewing gum according to any of the claims 1-23, wherein the chewing gum comprises at least one resin in the amount of at least 8% by weight of the chewing gum.

25. Non-tack chewing gum according to any of the claims 1-24, wherein said chewing gum comprises at least one resin in the amount of about 2 to about 60% wt of the chewing gum.

26. Non-tack chewing gum according to any of the claims 1-25, wherein said chewing gum comprises at least one resin in the amount of about 5 to about 25% wt of the chewing gum.

27. Non-tack chewing gum according to any of the claims 1-26, wherein said at least one resin is substantially formed by said homopolymer.

28. Non-tack chewing gum according to any of the claims 1-27, wherein said resins or resinous polymers comprise at least one natural, at least one synthetic resin or any combination thereof.

29. Non-tack chewing gum according to any of the claims 1-28, wherein the chewing gum comprises said at least one elastomer in the amount of at least 3% by weight, preferably at least 5% by weight of said chewing gum.

30. Non-tack chewing gum according to any of the claims 1-29, wherein the chewing gum comprises said at least one elastomer in the amount of at least 8% by weight of the chewing gum.

31. Non-tack chewing gum according to any of the claims 1-30, wherein said chewing gum comprises said at least one elastomer in the amount of about 0.5 to about 70% wt of the chewing gum,

32. Non-tack chewing gum according to any of the claims 1-31, wherein said chewing gum comprises said at least one elastomer in the amount of about 2 to about 20% wt of the chewing gum.

33. Non-tack chewing gum according to any of the claims 1-32, wherein said at least one elastomer is biodegradable.

34. Non-tack chewing gum according to any of the claims 1-33, wherein said at least one elastomer comprises a polyester.

35. Non-tack chewing gum according to any of the claims 1-34, wherein said at least one elastomer is obtainable by ring-opening polymerization of cyclic monomers.

36. Non-tack chewing gum according to any of the claims 1-35, wherein said at least one elastomer is obtainable by the polymerization of at least one di- or polyfunctional alcohol or derivative thereof and at least one di- or polyfunctional carboxylic acid or derivative thereof.

37. Non-tack chewing gum according to any of the claims 1-36, wherein the weight ratio between the resin having an average molecular weight of about 500 to 60,000 g/mol Mn and the elastomer having an average molecular weight of about 30,000 g/mol to 1,000,000 g/mol Mn is within the range of about 1:5 and 20:1.

38. Non-tack chewing gum according to any of the claims 1-37, wherein the weight ratio between the resin having an average molecular weight of about 500 to 60,000 g/mol Mn and the elastomer having an average molecular weight of about 30,000 g/mol to 1,000,000 g/mol Mn is within the range of about 1:3 and 10:1.

39. Non-tack chewing gum according to any of the claims 1-38, wherein said chewing gum comprises one or more chewing gum ingredients selected from the group comprising flavoring agents, sweetening agents, fillers, softeners, emulsifiers, and active ingredients.

40. Non-tack chewing gum according to any of the claims 1-39, wherein said flavoring agents comprise natural and synthetic flavorings in the form of natural vegetable components, essential oils, essences, extracts, powders, including acids and other substances capable of affecting the taste profile.

41. Non-tack chewing gum according to any of the claims 1-40, wherein said chewing gum comprises flavor in an amount of 0.01 to about 25 wt %, preferably in an amount of 0.1 to about 5 wt %, said percentage being based on the total weight of the chewing gum.

42. Non-tack chewing gum according to any of the claims 1-41, wherein the chewing gum is prepared with about 2-15% by weight of a syrup blend; wherein the syrup blend includes about 25-45% glycerin, about 55-75% hydrogenated starch hydrolysates.

43. Non-tack chewing gum according to any of the claims 1-42, wherein the syrup blend is present at about 2-15% by weight of the chewing gum.

44. Non-tack chewing gum according to any of the claims 1-43, wherein the syrup blend is present at about 5-10% by weight of the chewing gum.

45. Non-tack chewing gum according to any of the claims 1-44, wherein the syrup blend includes about 25-45% glycerin, about 55-75% hydrogenated starch hydrolysates.

46. Non-tack chewing gum according to any of the claims 1-45, wherein the syrup blend comprises a coevaporated blend of glycerin mixed with hydrogenated starch hydrolysates and water.

47. Non-tack chewing gum according to any of the claims 1-46, wherein the chewing gum comprises at least one softener in an amount of about 0 to about 20% by weight of the chewing gum, more typically about 0 to about 10% by weight of the chewing gum.

48. Non-tack chewing gum according to any of the claims 1-47, wherein the amount of emulsifier is in the range of 0 to 18% by weight of the chewing gum.

49. Non-tack chewing gum according to any of the claims 1-48, wherein said sweetening agents are selected from the group comprising bulk sweeteners, and high-intensity sweeteners, and combinations thereof.

50. Non-tack chewing gum according to any of the claims 1-49, wherein the chewing gum comprises sugar.

51. Non-tack chewing gum according to any of the claims 1-50, wherein the chewing gum is sugar free.

52. Non-tack chewing gum according to any of the claims 1-51, wherein said bulk sweeteners comprises an amount of about 5 to about 95%, preferably about 20 to about 80% by weight of the chewing gum.

53. Non-tack chewing gum according to any of the claims 1-52, wherein the chewing gum comprises high-intensity sweeteners in an amount of about 0 to about 1.2%, preferably about 0.1 to about 0.6% by weight of the chewing gum.

54. Non-tack chewing gum according to any of the claims 1-53, wherein the chewing gum comprises filler in an amount of about 0 to about 50% by weight of the chewing gum, more typically about 5 to about 20% by weight of the chewing gum.

55. Non-tack chewing gum according to any of the claims 1-54, wherein the chewing gum comprises at least one coloring agent.

56. Non-tack chewing gum according to any of the claims 1-55, wherein said chewing gum ingredients comprise active ingredients.

57. Non-tack chewing gum according to any of the claims 1-56, wherein said chewing gum is coated with an outer coating selected from the group comprising hard coating, soft coating and edible film-coating.

58. Non-tack chewing gum according to any of the claims 1-57, wherein the outer coating comprises at least one additive component selected from the group comprising a binding agent, a moisture-absorbing component, a film-forming agent, a dispersing agent, an antisticking component, a bulking agent, a flavoring agent, a coloring agent, a pharmaceutically or cosmetically active component, a lipid component, a wax component, a sugar, an acid and an agent capable of accelerating the after-chewing degradation of the degradable polymers.

59. Non-tack chewing gum according to any of the claims 1-58, wherein the chewing gum is wax free.

60. Non-tack chewing gum according to any of the claims 1-59, wherein the chewing gum is made by tableting.

## Patentansprüche

1. Nicht-klebriger Kaugummi, welcher Kaugummibestandteile umfasst,
wobei der Kaugummi mindestens ein Elastomer und mindestens ein Harz umfasst,
wobei das mindestens eine Harz mindestens ein synthetisches Homopolymerharz umfasst,
wobei das synthetische Homopolymer biologisch abbaubar ist,
wobei die Menge des synthetischen Homopolymers des Kaugummis etwa 0,5 Gew.-% bis 60 Gew.-% des Kaugummis beträgt,
wobei das mindestens eine synthetische Homopolymer einen PD (PD: Polydispersitätsindex) von 1,1 bis 20 aufweist und
wobei das mindestens eine Elastomer Butadien-Styrol, Isobutylen-Isopren, Polyisobutylen, Polyisopren oder eine beliebige Kombination davon umfasst.

2. Nicht-klebriger Kaugummi nach Anspruch 1, wobei die Menge des synthetischen Homopolymers des Kaugummis etwa 2 Gew.-% bis 50 Gew.-% des Kaugummis, vorzugsweise etwa 2 Gew.-% bis 30 Gew.-% des Kaugummis beträgt.

3. Nicht-klebriger Kaugummi nach Anspruch 1 oder 2, wobei das synthetische Homopolymer harzartig ist.

4. Nicht-klebriger Kaugummi nach einem der Ansprüche 1-3, wobei das synthetische Homopolymer ein Polyesterpolymer umfasst.

5. Nicht-klebriger Kaugummi nach einem der Ansprüche 1-4, wobei das Polyesterpolymer durch Ringöffnungspolymerisation von cyclischen Monomeren erhältlich ist.

6. Nicht-klebriger Kaugummi nach einem der Ansprüche 1-5, wobei das Polyesterpolymer durch Ringöffnungspolymerisation von cyclischen Monomeren, die aus der Gruppe von cyclischen Estern und cyclischen Carbonaten ausgewählt sind, erhältlich ist.

7. Nicht-klebriger Kaugummi nach einem der Ansprüche 1-6, wobei das Polyesterpolymer durch Ringöffnungspolymerisation von cyclischen Monomeren, die aus der Gruppe von D,L-Lactid, L-Lactid, Glycolid, ε-Caprolacton, δ-Valerolacton, Trimethylencarbonat (TMC) und Dioxanon ausgewählt sind, erhältlich ist.

8. Nicht-klebriger Kaugummi nach einem der Ansprüche 1-7, wobei das mindestens eine Homopolymer aus der Gruppe von Poly(D,L-lactid) und Polyglycolid ausgewählt ist.

9. Nicht-klebriger Kaugummi nach einem der Ansprüche 1-8, wobei das mindestens eine Homopolymer aus der Gruppe von Poly(D,L-lactid) ausgewählt ist und wobei das Verhältnis zwischen D- und L-Milchsäuremonomeren zwischen etwa 1:10 und 10:1 liegt.

10. Nicht-klebriger Kaugummi nach einem der Ansprüche 1-9, wobei das mindestens eine Homopolymer aus der Gruppe von Poly(D,L-lactid) ausgewählt ist und wobei das Verhältnis zwischen D- und L-Milchsäuremonomeren etwa 1:1 beträgt.

11. Nicht-klebriger Kaugummi nach einem der Ansprüche 1-10, wobei das Homopolymer einen Polyester umfasst, der durch Reaktion von mindestens einem di- oder polyfunktionellen Alkohol oder Derivat davon und mindestens einer di- oder polyfunktionellen Säure oder einem Derivat davon hergestellt ist.

12. Nicht-klebriger Kaugummi nach einem der Ansprüche 1-11, wobei das Säurederivat Ester, Anhydride oder Halogenide von Di- oder Polycarbonsäuren umfasst.

13. Nicht-klebriger Kaugummi nach einem der Ansprüche 1-12, wobei das Säurederivat Methyl- oder Ethylester von Säuren umfasst.

14. Nicht-klebriger Kaugummi nach einem der Ansprüche 1-13, wobei das Homopolymer einen Polyester umfasst, der durch Kondensationsreaktion von mindestens einer di- oder polyfunktionellen Hydroxycarbonsäure oder einem Derivat davon hergestellt ist.

15. Nicht-klebriger Kaugummi nach einem der Ansprüche 1-14, wobei das mindestens eine Homopolymer einen PD von 1,3 bis 12 aufweist.

16. Nicht-klebriger Kaugummi nach einem der Ansprüche 1-15, wobei das Homopolymer eine Glasübergangstemperatur (Tg) über 20°C, vorzugsweise über 30°C und am meisten bevorzugt über etwa 35°C aufweist.

17. Nicht-klebriger Kaugummi nach einem der Ansprüche 1-16, wobei die relative Molekülmasse des mindestens einen Harzes geringer als 400.000 g/mol Mn ist.

18. Nicht-klebriger Kaugummi nach einem der Ansprüche 1-17, wobei die relative Molekülmasse des mindestens einen Harzes geringer als 200.000 g/mol Mn ist.

19. Nicht-klebriger Kaugummi nach einem der Ansprüche 1-18, wobei die relative Molekülmasse des mindestens einen Harzes geringer als 60.000 g/mol Mn ist.

20. Nicht-klebriger Kaugummi nach einem der Ansprüche 1-19, wobei die relative Molekülmasse des mindestens einen Harzes etwa 60.000 g/mol Mn beträgt.

21. Nicht-klebriger Kaugummi nach einem der Ansprüche 1-20, wobei die relative Molekülmasse des mindestens einen Harzes im Bereich von 500 g/mol Mn bis 60.000 g/mol Mn liegt.

22. Nicht-klebriger Kaugummi nach einem der Ansprüche 1-21, wobei die relative Molekülmasse des mindestens einen Harzes im Bereich von 5000 g/mol Mn bis 30.000 g/mol Mn liegt.

23. Nicht-klebriger Kaugummi nach einem der Ansprüche 1-22, wobei der Kaugummi mindestens ein Harz in einer Menge von mindestens 5 Gew.-% des Kaugummis umfasst.

24. Nicht-klebriger Kaugummi nach einem der Ansprüche 1-23, wobei der Kaugummi mindestens ein Harz in einer Menge von mindestens 8 Gew.-% des Kaugummis umfasst.

25. Nicht-klebriger Kaugummi nach einem der Ansprüche 1-24, wobei der Kaugummi mindestens ein Harz in einer Menge von etwa 2 bis etwa 60 Gew.-% des Kaugummis umfasst.

26. Nicht-klebriger Kaugummi nach einem der Ansprüche 1-25, wobei der Kaugummi mindestens ein Harz in einer Menge von etwa 5 bis etwa 25 Gew.-% des Kaugummis umfasst.

27. Nicht-klebriger Kaugummi nach einem der Ansprüche 1-26, wobei das mindestens eine Harz im Wesentlichen aus dem Homopolymer gebildet wird.

28. Nicht-klebriger Kaugummi nach einem der Ansprüche 1-27, wobei die Harze oder harzartigen Polymere mindestens ein natürliches, mindestens ein synthetisches Harz oder eine beliebige Kombination davon umfassen.

29. Nicht-klebriger Kaugummi nach einem der Ansprüche 1-28, wobei der Kaugummi das mindestens eine Elastomer in einer Menge von mindestens 3 Gew.-%, vorzugsweise mindestens 5 Gew.-% des Kaugummis umfasst.

30. Nicht-klebriger Kaugummi nach einem der Ansprüche 1-29, wobei der Kaugummi das mindestens eine Elastomer in einer Menge von mindestens 8 Gew.-% des Kaugummis umfasst.

31. Nicht-klebriger Kaugummi nach einem der Ansprüche 1-30, wobei der Kaugummi das mindestens eine Elastomer in einer Menge von etwa 0,5 bis etwa 70 Gew.-% des Kaugummis umfasst.

32. Nicht-klebriger Kaugummi nach einem der Ansprüche 1-31, wobei der Kaugummi das mindestens eine Elastomer in einer Menge von etwa 2 bis etwa 20 Gew.-% des Kaugummis umfasst.

33. Nicht-klebriger Kaugummi nach einem der Ansprüche 1-32, wobei das mindestens eine Elastomer biologisch abbaubar ist.

34. Nicht-klebriger Kaugummi nach einem der Ansprüche 1-33, wobei das mindestens eine Elastomer einen Polyester umfasst.

35. Nicht-klebriger Kaugummi nach einem der Ansprüche 1-34, wobei das mindestens eine Elastomer durch Ringöftnungspolymerisation von cyclischen Monomeren erhältlich ist.

36. Nicht-klebriger Kaugummi nach einem der Ansprüche 1-35, wobei das mindestens eine Elastomer durch die Polymerisation von mindestens einem di- oder polyfunktionellen Alkohol oder Derivat davon und mindestens einer di- oder polyfunktionellen Carbonsäure oder einem Derivat davon erhältlich ist.

37. Nicht-klebriger Kaugummi nach einem der Ansprüche 1-36, wobei das Gewichtsverhältnis zwischen dem Harz mit einer mittleren Molekülmasse von etwa 500 bis 60.000 g/mol Mn und dem Elastomer mit einer mittleren Molekülmasse von etwa 30.000 g/mol bis 1.000.000 g/mol Mn im Bereich von etwa 1:5 bis 20:1 liegt.

38. Nicht-klebriger Kaugummi nach einem der Ansprüche 1-37, wobei das Gewichtsverhältnis zwischen dem Harz mit einer mittleren Molekülmasse von etwa 500 bis 60.000 g/mol Mn und dem Elastomer mit einer mittleren Molekülmasse von etwa 30.000 g/mol bis 1.000.000 g/mol Mn im Bereich von etwa 1:3 bis 10:1 liegt.

39. Nicht-klebriger Kaugummi nach einem der Ansprüche 1-38, wobei der Kaugummi einen oder mehrere Kaugummibestandteile umfasst, die aus der Gruppe umfassend Geschmacks- und Aromastoffe, Süßungsmittel, Füllstoffe, Weichmacher, Emulgiermittel und Wirkstoffe ausgewählt sind.

40. Nicht-klebriger Kaugummi nach einem der Ansprüche 1-39, wobei die Geschmacks- und Aromastoffe natürliche und synthetische Geschmacks- und Aromastoffe in Form von natürlichen pflanzlichen Bestandteilen, etherischen Ölen, Essenzen, Extrakten, Pulvern, einschließlich Säuren und anderen Substanzen, die in der Lage sind, das Geschmacksprofil zu beeinflussen, umfassen.

41. Nicht-klebriger Kaugummi nach einem der Ansprüche 1-40, wobei der Kaugummi Geschmacks- oder Aromastoff in einer Menge von 0,01 bis etwa 25 Gew.-%, vorzugsweise in einer Menge von 0,1 bis etwa 5 Gew.-% umfasst, wobei der Prozentsatz auf dem Gesamtgewicht des Kaugummis basiert.

42. Nicht-klebriger Kaugummi nach einem der Ansprüche 1-41, wobei der Kaugummi mit etwa 2-15 Gew.-% eines Sirupgemisches hergestellt ist, wobei das Sirupgemisch etwa 25-45% Glycerin, etwa 55-75% hydrierte Stärkehydrolysate umfasst.

43. Nicht-klebriger Kaugummi nach einem der Ansprüche 1-42, wobei das Sirupgemisch in einer Konzentration von etwa 2-15 Gew.-% des Kaugummis vorhanden ist.

44. Nicht-klebriger Kaugummi nach einem der Ansprüche 1-43, wobei das Sirupgemisch in einer Konzentration von etwa 5-10 Gew.-% des Kaugummis vorhanden ist.

45. Nicht-klebriger Kaugummi nach einem der Ansprüche 1-44, wobei das Sirupgemisch etwa 25-45% Glycerin, etwa 55-75% hydrierte Stärkehydrolysate umfasst.

46. Nicht-klebriger Kaugummi nach einem der Ansprüche 1-45, wobei das Sirupgemisch ein gemeinsam verdampftes Gemisch von Glycerin gemischt mit hydrierten Stärkehydrolysaten und Wasser umfasst.

47. Nicht-klebriger Kaugummi nach einem der Ansprüche 1-46, wobei der Kaugummi mindestens einen Weichmacher in einer Menge von etwa 0 bis etwa 20 Gew.-% des Kaugummis, typischer etwa 0 bis etwa 10 Gew.-% des Kaugummis umfasst.

48. Nicht-klebriger Kaugummi nach einem der Ansprüche 1-47, wobei die Menge von Emulgiermittel im Bereich von 0 bis 18 Gew.-% des Kaugummis liegt.

49. Nicht-klebriger Kaugummi nach einem der Ansprüche 1-48, wobei die Süßungsmittel aus der Gruppe, umfassend in größerer Menge zu verwendende Süßungsmittel und hochintensive Süßungsmittel und Kombinationen davon, ausgewählt sind.

50. Nicht-klebriger Kaugummi nach einem der Ansprüche 1-49, wobei der Kaugummi Zucker umfasst.

51. Nicht-klebriger Kaugummi nach einem der Ansprüche 1-50, wobei der Kaugummi zuckerfrei ist.

52. Nicht-klebriger Kaugummi nach einem der Ansprüche 1-51, wobei die in größerer Menge zu verwendenden Süßungsmittel eine Menge von etwa 5 bis etwa 95 Gew.-%, vorzugsweise etwa 20 bis etwa 80 Gew.-% des Kaugummis umfassen.

53. Nicht-klebriger Kaugummi nach einem der Ansprüche 1-52, wobei der Kaugummi hochintensive Süßungsmittel in einer Menge von etwa 0 bis etwa 1,2 Gew.-%, vorzugsweise etwa 0,1 bis etwa 0,6 Gew.-% des Kaugummis umfasst.

54. Nicht-klebriger Kaugummi nach einem der Ansprüche 1-53, wobei der Kaugummi Füllstoff in einer Menge von etwa 0 bis etwa 50 Gew.-% des Kaugummis, in typischerer Weise etwa 5 bis etwa 20 Gew.-% des Kaugummis umfasst.

55. Nicht-klebriger Kaugummi nach einem der Ansprüche 1-54, wobei der Kaugummi mindestens ein Färbemittel umfasst.

56. Nicht-klebriger Kaugummi nach einem der Ansprüche 1-55, wobei die Kaugummibestandteile Wirkstoffe umfassen.

57. Nicht-klebriger Kaugummi nach einem der Ansprüche 1-56, wobei der Kaugummi mit einem äußeren Überzug, der aus der Gruppe umfassend harte Überzüge, weiche Überzüge und essbare Filmüberzüge ausgewählt ist, überzogen ist.

58. Nicht-klebriger Kaugummi nach einem der Ansprüche 1-57, wobei der äußere Überzug mindestens einen zusätzlichen Bestandteil, ausgewählt aus der Gruppe umfassend ein Bindemittel, einen Feuchtigkeit absorbierenden Bestandteil, ein filmbildendes Mittel, ein Dispergiermittel, einen Klebrigkeit verhindernden Bestandteil, einen Fülligkeit verleihenden Bestandteil, einen Geschmacks- oder Aromastoff, ein Färbemittel, einen pharmazeutisch oder kosmetisch wirksamen Bestandteil, einen Lipidbestandteil, einen Wachsbestandteil, einen Zucker, eine Säure und ein Mittel, das in der Lage ist, den nach dem Kauen erfolgenden Abbau der abbaubaren Polymere zu beschleunigen, umfasst.

59. Nicht-klebriger Kaugummi nach einem der Ansprüche 1-58, wobei der Kaugummi wachsfrei ist.

60. Nicht-klebriger Kaugummi nach einem der Ansprüche 1-59, wobei der Kaugummi durch Tablettieren hergestellt ist.

## Revendications

1. Chewing-gum non collant comprenant des ingrédients de chewing-gum, ledit chewing-gum comprenant au moins un élastomère et au moins une résine,
ladite au moins une résine comprenant au moins une résine homopolymère synthétique,
ledit homopolymère synthétique étant biodégradable,
la quantité dudit homopolymère synthétique dudit chewing-gum étant d'environ V₂ % à 60% en poids dudit chewing-gum,
dans lequel ledit au moins un homopolymère synthétique a un PD (PD : indice de polydispersité) de 1,1 à 20 et
dans lequel ledit au moins un élastomère comprend du butadiène-styrène, de l'isobutylène-isoprène, du polyisobutylène, du polyisoprène ou n'importe quelle combinaison de ceux-ci.

2. Chewing-gum non collant selon la revendication 1, dans lequel la quantité dudit homopolymère synthétique dudit chewing-gum est d'environ 2% à environ 50% en poids dudit chewing-gum, de préférence d'environ 2% à 30% en poids dudit chewing-gum.

3. Chewing-gum non collant selon les revendications 1 ou 2, dans lequel ledit homopolymère synthétique est résineux.

4. Chewing-gum non collant selon l'une quelconque des revendications 1-3, dans lequel l'homopolymère synthétique comprend un polymère de polyester.

5. Chewing-gum non collant selon l'une quelconque des revendications 1-4, dans lequel ledit polymère de polyester peut être obtenu par une polymérisation par ouverture de cycle de monomères cycliques.

6. Chewing-gum non collant selon l'une quelconque des revendications 1-5, dans lequel ledit polymère de polyester peut être obtenu par polymérisation par ouverture de cycle de monomères cycliques choisis dans le groupe des esters cycliques et des carbonates cycliques.

7. Chewing-gum non collant selon l'une quelconque des revendications 1-6, dans lequel ledit polymère de polyester peut être obtenu par polymérisation par ouverture de cycle de monomères cycliques choisis dans le groupe constitué par le D,L-lactide, le L-lactide, le glycolide, la ε-caprolactone, la δ-valérolactone, le triméthylène carbonate (TMC) et la dioxanone.

8. Chewing-gum non collant selon l'une quelconque des revendications 1-7, dans lequel ledit au moins un homopolymère est choisi dans le groupe constitué par le poly(D,L-lactide) et le poly-glycolide.

9. Chewing-gum non collant selon l'une quelconque des revendications 1-8, dans lequel ledit au moins un homopolymère est choisi dans le groupe constitué par le poly(D,L-lactide) et dans lequel le rapport entre les monomères d'acide lactique D et L est d'environ 1 :10 à 10 :1.

10. Chewing-gum non collant selon l'une quelconque des revendications 1-9, dans lequel ledit au moins un homopolymère est choisi dans le groupe constitué par le poly(lactide D,L) et dans lequel le rapport entre les monomères d'acide lactique D et Lest d'environ 1 : 1.

11. Chewing-gum non collant selon l'une quelconque des revendications 1-10, dans lequel ledit homopolymère comprend un polyester produit par la réaction d'au moins un alcool di- ou polyfonctionnel ou un de ses dérivés et au moins un acide di- ou polyfonctionnel ou un de ses dérivés.

12. Chewing-gum non collant selon l'une quelconque des revendications 1-11, dans lequel ledit dérivé d'acide comprend des esters, des anhydrides ou des halogénures d'acides di- ou polycarboxyliques.

13. Chewing-gum non collant selon l'une quelconque des revendications 1-12, dans lequel ledit dérivé acide comprend des esters méthyliques ou éthyliques d'acides.

14. Chewing-gum non collant selon l'une quelconque des revendications 1-13, dans lequel ledit homopolymère comprend un polyester produit par une réaction de condensation d'au moins un acide hydroxy-carboxylique di- ou polyfonctionnel ou un de ses dérivés.

15. Chewing-gum non collant selon l'une quelconque des revendications 1-14, dans lequel ledit au moins un homopolymère a un PD de 1,3 à 12.

16. Chewing-gum non collant selon l'une quelconque des revendications 1-15, dans lequel ledit homopolymère a une température de transition vitreuse (Tg) supérieure à 20°C, de préférence supérieure à 30°C et de manière davantage préférée supérieure à environ 35°C.

17. Chewing-gum non collant selon l'une quelconque des revendications 1-16, dans lequel la masse moléculaire de ladite au moins une résine est inférieure à 400 000 g/mol Mn.

18. Chewing-gum non collant selon l'une quelconque des revendications 1-17, dans lequel la masse moléculaire de ladite au moins une résine est inférieure à 200 000 g/mol Mn.

19. Chewing-gum non collant selon l'une quelconque des revendications 1-18, dans lequel la masse moléculaire de ladite au moins une résine est inférieure à 60 000 g/mol Mn.

20. Chewing-gum non collant selon l'une quelconque des revendications 1-19, dans lequel la masse moléculaire de ladite au moins une résine est d'environ 60 000 g/mol Mn.

21. Chewing-gum non collant selon l'une quelconque des revendications 1-20, dans lequel la masse moléculaire de ladite au moins une résine est dans la gamme de 500 g/mol Mn à 60 000 g/mol Mn.

22. Chewing-gum non collant selon l'une quelconque des revendications 1-21, dans lequel la masse moléculaire de ladite au moins une résine est dans la gamme de 5000 g/mol Mn à 30 000 g/mol Mn.

23. Chewing-gum non collant selon l'une quelconque des revendications 1-22, dans lequel le chewing-gum comprend au moins une résine en quantité d'au moins 5% en poids du chewing-gum.

24. Chewing-gum non collant selon l'une quelconque des revendications 1-23, dans lequel le chewing-gum comprend au moins une résine en quantité d'au moins 8% en poids du chewing-gum.

25. Chewing-gum non collant selon l'une quelconque des revendications 1-24, dans lequel ledit chewing-gum comprend au moins une résine en quantité d'environ 2 à environ 60% en poids du chewing-gum.

26. Chewing-gum non collant selon l'une quelconque des revendications 1-25, dans lequel ledit chewing-gum comprend au moins une résine en quantité d'environ 5 à environ 25% en poids du chewing-gum.

27. Chewing-gum non collant selon l'une quelconque des revendications 1-26, dans lequel ladite au moins une résine est substantiellement formée par ledit homopolymère.

28. Chewing-gum non collant selon l'une quelconque des revendications 1-27, dans lequel lesdites résines ou polymères résineux comprennent au moins une résine naturelle, au moins une résine synthétique ou n'importe quelle combinaison de celles-ci.

29. Chewing-gum non collant selon l'une quelconque des revendications 1-28, dans lequel le chewing-gum comprend ledit au moins un élastomère en quantité d'au moins 3% en poids, de préférence au moins 5% en poids dudit chewing-gum.

30. Chewing-gum non collant selon l'une quelconque des revendications 1-29, dans lequel le chewing-gum comprend ledit au moins un élastomère en quantité d'au moins 8% en poids.

31. Chewing-gum non collant selon l'une quelconque des revendications 1-30, dans lequel le chewing-gum comprend ledit au moins un élastomère en quantité d'au moins 0,5% à environ 70% en poids du chewing-gum.

32. Chewing-gum non collant selon l'une quelconque des revendications 1-31, dans lequel ledit chewing-gum comprend ledit au moins un élastomère dans la quantité d'environ 2 à environ 20% en poids du chewing-gum.

33. Chewing-gum non collant selon l'une quelconque des revendications 1-32, dans lequel ledit au moins un élastomère est biodégradable.

34. Chewing-gum non collant selon l'une quelconque des revendications 1-33, dans lequel ledit au moins un élastomère comprend un polyester.

35. Chewing-gum non collant selon l'une quelconque des revendications 1-34, dans lequel ledit au moins un élastomère peut être obtenu par polymérisation par ouverture de cycle de monomères cycliques.

36. Chewing-gum non collant selon l'une quelconque des revendications 1-35, dans lequel ledit au moins un élastomère peut être obtenu par la polymérisation d'au moins un alcool di- ou polyfonctionnel ou un de ses dérivés et au moins un acide carboxylique di- ou polyfonctionnel ou un de ses dérivés.

37. Chewing-gum non collant selon l'une quelconque des revendications 1-36, dans lequel le rapport en poids entre la résine ayant une masse moléculaire moyenne d'environ 500 à 60 000 g/mol Mn et l'élastomère ayant une masse moléculaire moyenne d'environ 30 000 g/mol à 1 000 000 g/mol Mn est dans la gamme d'environ 1 :5 et 20 :1.

38. Chewing-gum non collant selon l'une quelconque des revendications 1-37, dans lequel le rapport en poids entre la résine ayant une masse moléculaire moyenne d'environ 500 à 60 000 g/mol Mn et l'élastomère ayant une masse moléculaire moyenne d'environ 30 000 g/mol à 1 000 000 g/mol Mn est dans la gamme d'environ 1 :3 et 10 :1.

39. Chewing-gum non collant selon l'une quelconque des revendications 1-38, dans lequel ledit chewing-gum comprend un ou plusieurs ingrédients de chewing-gum choisis dans le groupe comprenant des agents aromatisants, des agents édulcorants, des charges, des attendrisseurs, des émulsionnants, et des ingrédients actifs.

40. Chewing-gum non collant selon l'une quelconque des revendications 1-39, dans lequel lesdits agents aromatisants comprennent des arômes naturels et synthétiques sous la forme de composants végétaux naturels, d'huiles essentielles, d'essences, d'extraits, de poudres, y compris des acides et d'autres substances capables d'affecter le profil du goût.

41. Chewing-gum non collant selon l'une quelconque des revendications 1-40, dans lequel ledit chewing-gum comprend un arôme dans une quantité de 0,01 à environ 25% en poids, de préférence dans une quantité de 0,1 à environ 5% en poids, ledit pourcentage étant basé sur le poids total du chewing-gum.

42. Chewing-gum non collant selon l'une quelconque des revendications 1-41, dans lequel le chewing-gum est préparé avec environ 2-15% en poids d'un mélange de sirop ; dans lequel le mélange de sirop comprend environ 25-45% de glycérine, environ 55-75% d'hydrolysats d'amidon hydrogénés.

43. Chewing-gum non collant selon l'une quelconque des revendications 1-42, dans lequel le mélange de sirop est présent à environ 2-15% en poids du chewing-gum.

44. Chewing-gum non collant selon l'une quelconque des revendications 1-43, dans lequel le mélange de sirop est présent à environ 5-10% en poids du chewing-gum.

45. Chewing-gum non collant selon l'une quelconque des revendications 1-44, dans lequel le mélange de sirop comprend environ 25-45% de glycérine, environ 55-75% d'hydrolysats d'amidon hydrogénés.

46. Chewing-gum non collant selon l'une quelconque des revendications 1-45, dans lequel le mélange de sirop comprend un mélange co-évaporé de glycérine mélangé avec des hydrolysats d'amidon hydrogénés et de l'eau.

47. Chewing-gum non collant selon l'une quelconque des revendications 1-46, dans lequel le chewing-gum comprend au moins un adoucisseur, dans une quantité d'environ 0 à environ 20% en poids du chewing-gum, plus typiquement environ 0 à environ 10% en poids du chewing-gum.

48. Chewing-gum non collant selon l'une quelconque des revendications 1-47, dans lequel la quantité d'émulsionnant est dans la gamme de 0 à 18% en poids du chewing-gum.

49. Chewing-gum non collant selon l'une quelconque des revendications 1-48, dans lequel lesdits agents édulcorants sont choisis dans le groupe comprenant des édulcorants de charge, et des édulcorants à haute intensité et des combinaisons de ceux-ci.

50. Chewing-gum non collant selon l'une quelconque des revendications 1-49, dans lequel le chewing-gum comprend du sucre.

51. Chewing-gum non collant selon l'une quelconque des revendications 1-50, dans lequel le chewing-gum est sans sucre.

52. Chewing-gum non collant selon l'une quelconque des revendications 1-51, dans lequel lesdits édulcorants de charge comprennent une quantité d'environ 5 à environ 95%, de préférence environ 20 à environ 80% en poids du chewing-gum.

53. Chewing-gum non collant selon l'une quelconque des revendications 1-52, dans lequel le chewing-gum comprend des édulcorants à haute intensité dans une quantité d'environ 0 à environ 1,2%, de préférence environ 0,1 à environ 0,6% en poids du chewing-gum.

54. Chewing-gum non collant selon l'une quelconque des revendications 1-53, dans lequel le chewing-gum comprend une charge dans une quantité d'environ 0 à environ 50% en poids du chewing-gunn, plus généralement environ 5 à environ 20% en poids du chewing-gum.

55. Chewing-gum non collant selon l'une quelconque des revendications 1-54, dans lequel le chewing-gutn comprend au moins un agent colorant.

56. Chewing-gum non collant selon l'une quelconque des revendications 1-55, dans lequel lesdits ingrédients de chewing-gum comprennent des ingrédients actifs.

57. Chewing-gum non collant selon l'une quelconque des revendications 1-56, dans lequel ledit chewing-gum est revêtu d'un revêtement extérieur choisi dans le groupe comprenant un revêtement dur, un revêtement mou et un revêtement par film comestible.

58. Chewing-gum non collant selon l'une quelconque des revendications 1-57, dans lequel le revêtement extérieur comprend au moins un composant additif choisi dans le groupe comprenant un agent de liaison, un composant absorbant l'humidité, un agent filmogène, un agent de dispersion, un composant anti-collage, un diluant, un agent aromatisant, un agent colorant, un composant pharmaceutiquement ou cosmétiquement actif, un lipide, une cire, un sucre, un acide et un agent capable d'accélérer la dégradation après mastication des polymères dégradables.

59. Chewing-gum non collant selon l'une quelconque des revendications 1-58, dans lequel le chewing-gum est sans cire.

60. Chewing-gum non collant selon l'une quelconque des revendications 1-59, réalisé par compression.
